(19) **Europäisches Patentamt European Patent Office Office européen des brevets**

(11) **EP 3 530 061 B1**

(12) **EUROPEAN PATENT SPECIFICATION**

(45) Date of publication and mention of the grant of the patent:
**16.09.2020 Bulletin 2020/38**

(21) Application number: **17867599.7**

(22) Date of filing: **03.11.2017**

(51) Int Cl.:
**H04W 74/08** *(2009.01)* **H04W 8/18** *(2009.01)*
**H04W 76/27** *(2018.01)*

(86) International application number:
**PCT/CN2017/109247**

(87) International publication number:
**WO 2018/082639 (11.05.2018 Gazette 2018/19)**

(54) **RANDOM ACCESS CHANNEL DESIGN, METHODS, AND APPARATUS**

DESIGN, VERFAHREN UND VORRICHTUNG FÜR EINEN DIREKTZUGRIFFSKANAL

PROCÉDÉS, CONCEPTION DE CANAL D'ACCÈS ALÉATOIRE ET APPAREIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.11.2016 US 201662416929 P**
**04.05.2017 US 201762501626 P**
**26.10.2017 US 201715794540**

(43) Date of publication of application:
**28.08.2019 Bulletin 2019/35**

(73) Proprietor: **Huawei Technologies Co., Ltd.**
**Longgang District**
**Shenzhen, Guangdong 518129 (CN)**

(72) Inventors:
• **LIN, Yicheng**
  **Ottawa**
  **Ontario K2B 7Z1 (CA)**
• **BALIGH, Mohammadhadi**
  **Ottawa**
  **Ontario K2M 0B1 (CA)**
• **VILAIPORNSAWAI, Usa**
  **Shenzhen, Guangdong 515129 (CN)**
• **AU, Kelvin Kar Kin**
  **Kanata**
  **Ontario K2M 0A2 (CA)**
• **FARMANBAR, Hamidreza**
  **Ottawa**
  **Ontario K2M 0E1 (CA)**

(74) Representative: **Pfenning, Meinig & Partner mbB**
**Patent- und Rechtsanwälte**
**Joachimsthaler Straße 10-12**
**10719 Berlin (DE)**

(56) References cited:
  **WO-A2-2013/170828    CN-A- 102 325 382**
  **CN-A- 103 067 864    CN-A- 103 444 099**
  **CN-A- 105 247 904**

• **CATT: "NR RACH Preamble Design Consideration", 3GPP DRAFT; R1-1608788_NR_RACHSIGNAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051148843, Retrieved from the Internet: URL:http://www.3gpp.org/ftp/Meetings_3GPP_SYNC/RAN1/Docs/ [retrieved on 2016-10-09]**
• **CATT: "Small data transmission in inactive state", 3GPP DRAFT; R2-166118, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung; 20161010 - 20161014 9 October 2016 (2016-10-09), XP051150736, Retrieved from the Internet: URL:http://www.3gpp.org/ftp/Meetings_3GPP_SYNC/RAN2/Docs/ [retrieved on 2016-10-09]**

## Description

### Field

The present disclosure relates generally to wireless communications and, in particular, to random access channel design and associated methods and apparatus.

### Background

A User Equipment (UE) in a wireless communication system may have multiple operating modes, including a connected or active operating mode and a standby or idle operating mode. In a connected or active operating mode, all UE functions are available, and the UE may be transmitting or receiving communication signals or otherwise being used by a user, for example. A standby or idle operating mode in which at least some UE functions are disabled could be useful for conserving power, for example, but requires a connection to the wireless communication system to be established or re-established before communication signals can be transmitted or received.

In current Long Term Evolution (LTE) systems, for instance, UEs have a Radio Resource Control (RRC) idle mode as a standby operating mode. When downlink (DL) data is to be transmitted to a UE by a network element in a communication system or uplink (UL) data is to be transmitted by a UE to a network element, a connection establishment procedure must be completed in order for the UE to transition from the RRC idle mode to an RRC connected mode, before data transmission and/or reception can begin.

The document 3GPP R1-1608788 "NR RACH Preamble Design Consideration" by CATT, 3GPP TSG RAN WG1 #86bis, 10-14 October 2016, discloses a multi-stage preamble sequence, designed to have a set of multiple short preamble sequences in combination as one RACH message 1.

### Summary

In a first aspect, the invention provides a method according to claim 1, the method comprising: receiving, at a network element in a communication network, a random access channel message from a User Equipment, UE, the random access channel message comprising multiple sequences, wherein the multiple sequences include a first sequence associated with a group of UEs that includes the UE and a second sequence associated with the UE.

Preferred embodiments of the method of claim 1 are defined in dependent claims 2 to 6.

In a second aspect, the invention provides an apparatus according to claim 7, the apparatus comprising: a processor; and a non-transitory processor-readable medium storing instructions which, when executed by the processor, cause the processor to perform a method in accordance with any one of claims 1 to 6.

In a third aspect, the invention provides a method according to claim 8, the method comprising: transmitting a random access channel message from a User Equipment, UE, to a network element in a communication network, the random access channel message comprising multiple sequences, wherein the multiple sequences include a first sequence associated with a group of UEs that includes the UE and a second sequence associated with the UE.

Preferred embodiments of the method of claim 8 are defined in dependent claims 9 to 13.

In a fourth aspect, the invention provides a User Equipment, UE, according to claim 14, the User Equipment comprising: a processor; and a non-transitory processor-readable medium storing instructions which, when executed by the processor, cause the processor to perform a method in accordance with any one of claims 8 to 13.

### Brief Description of the Drawings

Embodiments of the invention will be described in greater detail with reference to the accompanying drawings.

Fig. 1A is a block diagram illustrating a communication system in accordance with one embodiment.

Fig. 1B is a network diagram of another example communication system.

Fig. 2 is a block diagram illustrating an example PRACH frame structure.

Fig. 3 is a block diagram illustrating an example multi-preamble PRACH frame structure in which a second preamble follows a first preamble in the same subframe and in the same subband.

Fig. 4 is a block diagram illustrating another example multi-preamble PRACH frame structure in which a second preamble and a first preamble are in the same subband, but in different subframes.

Fig. 5 is a block diagram illustrating a further example multi-preamble PRACH frame structure in which a second preamble and a first preamble are in the same subframe but in different subbands.

Fig. 6 is a block diagram illustrating yet another example multi-preamble PRACH frame structure in which a second preamble and a first preamble are in different subframes and in different subbands.

Fig. 7 is a plot of gain versus distance and a first order polynomial fitted curve generated from system-level simulation.

Fig. 8 is a block diagram of an example PRACH frame format.

Fig. 9 is a block diagram of another example PRACH frame format for single-stage preamble detection.

Fig. 10 is a block diagram illustrating different resource mapping configurations that have different periodicity in time and occupy different frequency locations.

Fig. 11 is a block diagram illustrating different resource mapping configurations that have different periodicity in time, occupy different frequency locations, and have different bandwidths.

Fig. 12 is a block diagram illustrating multi-beam sweeping in PRACH transmission.

Fig. 13A is a flow diagram illustrating an example random access channel message processing method.

Fig. 13B is a flow diagram illustrating an example multi-stage sequence detection method according to an embodiment.

Fig. 14 is a block diagram illustrating a network element according to another embodiment.

Fig. 15A is a flow diagram illustrating an example random access channel request method.

Fig. 15B is a flow diagram illustrating an example multi-stage sequence detection method according to an embodiment.

Fig. 16 is a block diagram illustrating a UE according to an embodiment.

Figs. 17 and 18 illustrate further example devices that may implement the methods and teachings according to this disclosure.

## Detailed Description

For illustrative purposes, specific example embodiments will now be explained in greater detail below in conjunction with the figures.

The embodiments set forth herein represent information sufficient to practice the claimed subject matter and illustrate ways of practicing such subject matter. Upon reading the following description in light of the accompanying figures, those of skill in the art will understand the concepts of the claimed subject matter and will recognize applications of these concepts not particularly addressed herein. It should be understood that the invention is limited only by the scope of the accompanying claims.

Moreover, it will be appreciated that any module, component, or device disclosed herein that executes instructions may include or otherwise have access to a non-transitory computer/processor readable storage medium or media for storage of information, such as computer/processor readable instructions, data structures, program modules, and/or other data. A non-exhaustive list of examples of non-transitory computer/processor readable storage media includes magnetic cassettes, magnetic tape, magnetic disk storage or other magnetic storage devices, optical disks such as compact disc read-only memory (CD-ROM), digital video discs or digital versatile discs (i.e. DVDs), Blu-ray Disc™, or other optical storage, volatile and non-volatile, removable and non-removable media implemented in any method or technology, random-access memory (RAM), read-only memory (ROM), electrically erasable programmable read-only memory (EEPROM), flash memory or other memory technology. Any such non-transitory computer/processor storage media may be part of a device or accessible or connectable thereto. Computer/processor readable/executable instructions to implement an application or module described herein may be stored or otherwise held by such non-transitory computer/processor readable storage media.

The present disclosure refers to various UE operating modes or states, which may be called different names in other embodiments. For example, a connected or active operating mode is illustrative of an operating mode in which a connection such as an RRC connection is established, all UE functions are available, and the UE may be transmitting or receiving communication signals or otherwise being used by a user. A standby or idle operating mode is illustrative of an operating mode in which a connection such as an RRC connection is not established, at least some UE functions may be disabled, but the UE requires a connection to the wireless communication system to be established or re-established before communication signals can be transmitted or received. An inactive or connected inactive operating mode is illustrative of an operating mode in which information such as UE context and identifier information could be maintained by a network element or other component of an access network, to simplify re-connection of a UE to the access network. In an inactive or connected inactive operating mode, a connection such as an RRC connection may or may not have been established. Inactive or connected inactive state or operating mode could be considered a state or mode between connected or active and standby or idle. Some connected or active mode UE functions may be available, while others are not. In some embodiments, at least the UE context is maintained at the network side and UE identifier information is also maintained by a network element or other component of an access network as noted above, to simplify re-connection of a UE to the access network.

Turning now to the figures, some specific example embodiments will be described.

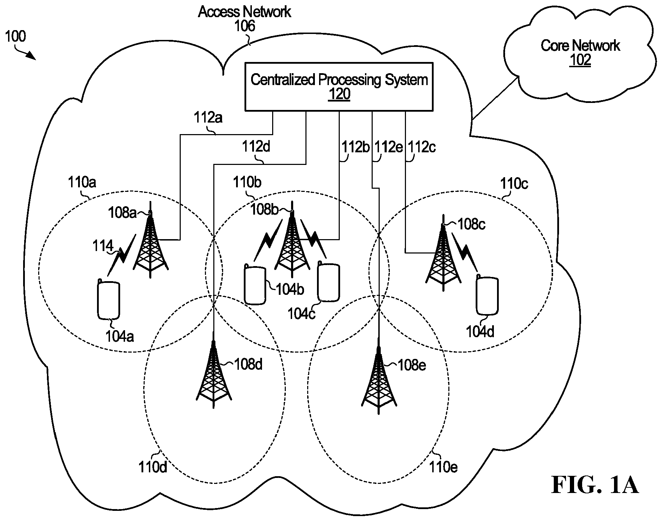

Fig. 1A is a diagram illustrating a communication system in accordance with one embodiment. The communication system 100 includes a core network 102 and an access network 106.

The core network 102 may provide any of various services, such as call control/switching and gateways to other networks. The core network 102 includes network components such as routers, switches, and servers.

The access network 106 is a wireless communication network, and is connected or coupled to the core network 102. The network elements or nodes 108a, 108b, 108c, 108d, 108e provide wireless communication service within respective wireless coverage areas 110a, 110b, 110c, 110d, 110e. Each network element 108a-e may be implemented using a radio transceiver, one or more antennas, and associated processing circuitry, such as antenna radio frequency (RF) circuitry, analog-to-digital/digital-to-analog converters, etc. Base stations, transmit-receive points (TRPs), and evolved NodeBs (eNBs) are examples of the network elements 108a-e.

UEs 104a, 104b, 104c, 104d wirelessly access the communication system 100 using the access network 106. Each UE 104a-d includes a radio transmitter and a radio receiver which may be integrated into a radio transceiver, one or more antennas, and associated processing circuitry, such as antenna radio frequency (RF) circuitry, analog-to-digital/digital-to-analog converters, etc. The network elements 108a-e and the UEs 104a-d may include similar types of components to support communications with each other in the communication system 100, but the actual implementations may be different. For example, the UEs 104a-d are portable between locations, whereas the network elements 108a-e are typically intended to be installed at a fixed location.

The network elements 108a-e are connected to a centralized processing system 120 in the access network 106, via respective communication links 112a, 112b, 112c, 112d, 112e. Each communication link 112a-e is an optical fibre communication link in one embodiment. Each network element 108a-e includes circuitry for transmitting data to the centralized processing system 120 and for receiving data from the centralized processing system via its respective communication link 112a-e. Although shown as a single centralized processing system in Fig. 1A, the centralized processing system 120 may be implemented by a network of one or more processing and control servers. Alternatively, the centralized processing system 120 may be implemented as a single server.

The network elements 108a-e may serve as a gateway between wireline and wireless portions of the access network 106, although this need not be the case in embodiments in which the communication links 112a-e are wireless links. The network elements 108a-e may be placed at fixed locations by a network provider, for example, to provide a substantially continuous wireless coverage area. This is shown in Fig. 1A in that wireless coverage areas 110a-e overlap each other so that the UEs 104a-d may move throughout the wireless coverage areas and still be served by the access network 106.

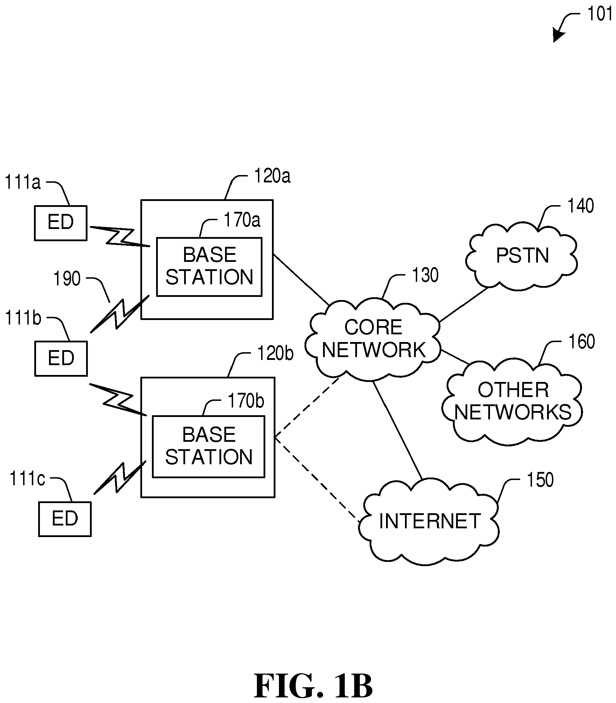

Fig. 1B is a network diagram of another example communication system 101 in which embodiments of the present disclosure could be implemented. In general, the communication system 101 enables multiple wireless or wired elements to communicate data and other content. The purpose of the communication system 101 may be to provide content (voice, data, video, text) via broadcast, narrowcast, user device to user device, etc. The communication system 101 may operate by sharing resources such as bandwidth.

In this example, the communication system 101 includes electronic devices (ED) 111a-111c, radio access networks (RANs) 120a-120b, a core network 130, a public switched telephone network (PSTN) 140, the internet 150, and other networks 160. Although certain numbers of these components or elements are shown in Fig. 1B, any reasonable number of these components or elements may be included in the communication system 101.

The EDs 111 a-111c are configured to operate, communicate, or both, in the communication system 101. For example, the EDs 111 a-111 c are configured to transmit, receive, or both via wireless or wired communication channels. Each ED 111 a-111c represents any suitable end user device for wireless operation and may include such devices (or may be referred to) as a user equipment/device (UE), wireless transmit/receive unit (WTRU), mobile station, fixed or mobile subscriber unit, cellular telephone, station (STA), machine type communication (MTC) device, personal digital assistant (PDA), smartphone, laptop, computer, tablet, wireless sensor, or consumer electronics device.

In Fig. 1B, the RANs 120a-120b include base stations 170a-170b, respectively. Each base station 170a-170b is configured to wirelessly interface with one or more of the EDs 111a-111c to enable access to any other base station 170a-170b, the core network 130, the PSTN 140, the internet 150, and/or the other networks 160. For example, the base stations 170a-170b may include (or be) one or more of several well-known devices, such as a base transceiver station (BTS), a Node-B (NodeB), an evolved NodeB (eNodeB), a Home eNodeB, a gNodeB, a transmission point (TP), a site controller, an access point (AP), or a wireless router. Any ED 110a-110c may be alternatively or additionally configured to interface, access, or communicate with any other base station 170a-170b, the internet 150, the core network 130, the PSTN 140, the other networks 160, or any combination of the preceding. The communication system 101 may include RANs, such as RAN 120b, wherein the corresponding base station 170b accesses the core network 130 via the internet 150, as shown.

The EDs 111a-111c and base stations 170a-170b are examples of communication equipment that can be configured to implement some or all of the functionality and/or embodiments described herein. In the embodiment shown in Fig. 1B, the base station 170a forms part of the RAN 120a, which may include other base stations, base station controller(s) (BSC), radio network controller(s) (RNC), relay nodes, elements, and/or devices. Any base station 170a, 170b may be a single element, as shown, or multiple elements, distributed in the corresponding RAN, or otherwise. Also, the base station 170b forms part of the RAN 120b, which may include other base stations, elements, and/or devices. Each base station 170a-170b transmits and/or receives wireless signals within a particular geographic region or area, sometimes referred to as a "cell" or "coverage area". A cell may be further divided into cell sectors, and a base station 170a-170b may, for example, employ multiple transceivers to provide service to multiple sectors. In some embodiments there may be established pico or femto cells where the radio access technology supports such. In some embodiments, multiple transceivers could be used for each cell, for example using multiple-input multiple-output (MIMO) technology. The number of RAN 120a-120b shown is exemplary only. Any number of RAN may be contemplated when devising the communication system 101.

The base stations 170a-170b communicate with one or more of the EDs 111a-111c over one or more air interfaces 190 using wireless communication links e.g. radio frequency (RF), microwave, infrared (IR), etc.. The air interfaces 190 may utilize any suitable radio access technology. For example, the communication system 101 may implement one or more channel access methods, such as code division multiple access (CDMA), time division multiple access (TDMA), frequency division multiple access (FDMA), orthogonal FDMA (OFDMA), or single-carrier FDMA (SC-FDMA) in the air interfaces 190.

A base station 170a-170b may implement Universal Mobile Telecommunication System (UMTS) Terrestrial Radio Access (UTRA) to establish an air interface 190 using wideband CDMA (WCDMA). In doing so, the base station 170a-170b may implement protocols such as HSPA, HSPA+ optionally including HSDPA, HSUPA or both. Alternatively, a base station 170a-170b may establish an air interface 190 with Evolved UTMS Terrestrial Radio Access (E-UTRA) using LTE, LTE-A, and/or LTE-B. It is contemplated that the communication system 101 may use multiple channel access functionality, including such schemes as described above. Other radio technologies for implementing air interfaces include IEEE 802.11, 802.15, 802.16, CDMA2000, CDMA2000 1X, CDMA2000 EV-DO, IS-2000, IS-95, IS-856, GSM, EDGE, and GERAN. Of course, other multiple access schemes and wireless protocols may be utilized.

The RANs 120a-120b are in communication with the core network 130 to provide the EDs 111a-111c with various services such as voice, data, and other services. The RANs 120a-120b and/or the core network 130 may be in direct or indirect communication with one or more other RANs (not shown), which may or may not be directly served by core network 130, and may or may not employ the same radio access technology as RAN 120a, RAN 120b or both. The core network 130 may also serve as a gateway access between (i) the RANs 120a-120b or EDs 111a-111c or both, and (ii) other networks (such as the PSTN 140, the internet 150, and the other networks 160). In addition, some or all of the EDs 111a-111c may include functionality for communicating with different wireless networks over different wireless links using different wireless technologies and/or protocols. Instead of wireless communication (or in addition thereto), the EDs may communicate via wired communication channels to a service provider or switch (not shown), and to the internet 150. PSTN 140 may include circuit switched telephone networks for providing plain old telephone service (POTS). Internet 150 may include a network of computers and subnets (intranets) or both, and incorporate protocols, such as IP, TCP, UDP. EDs 111a-111c may be multimode devices capable of operation according to multiple radio access technologies, and incorporate multiple transceivers necessary to support such.

Under certain conditions, a UE could transition from a connected or active operating mode or state to a standby or idle operating mode or state. For example, a UE could transition to a standby or idle operating mode after a time period of inactivity, during which limited communication signals were received or transmitted by the UE and the UE was not otherwise in use by a user. The UE could transition to a standby or idle operating mode after a time period of reduced activity, or activity below a threshold level. The standby or idle operating mode allows the UE to conserve battery power and thereby extend battery life, for example. Although limited communication functions may be supported in the standby or idle operating mode, a UE transitions from the standby or idle operating mode to the connected or active operating mode before full communication functions are restored. RRC idle is an example of a standby or idle operating mode.

Some wireless communication systems employ a connection establishment procedure that involves a message exchange over a Physical Random Access Channel (PRACH). In LTE systems, for example, a UE in RRC idle mode selects a preamble sequence out of a pool of sequences and follows a 4-step procedure to transition to RRC connected mode. The latency introduced by this procedure is typically more than 50 milliseconds, and can be as high as several hundred milliseconds, which may not be acceptable for some applications.

In accordance with embodiments disclosed herein, a UE has an inactive or connected inactive operating mode, in addition to or instead of a standby or idle operating mode that requires re-connection to an access network. UE context and identifier information could be maintained by a network element or other component of the access network, to enable a simplified transition procedure for the UE to transition from the inactive or connected inactive operating mode to the connected or active operating mode. A UE in the inactive or connected inactive operating mode could be involved in maintaining its connection to the access network, by transmitting tracking information and/or other information to a network element for example. In other embodiments, the network maintains the UE connection without requiring any action by the UE.

Consider New Radio (NR), for example, in which a new UE "inactive" or "connected inactive" mode or state is defined in addition to a connected or active mode or state and a standby or idle mode or state. In this new mode, the UE context and ID are preserved, while signaling, power consumption, and resource utilization are reduced. Such a new operating mode may involve new procedures such as new random access schemes. Examples herein refer to NR and PRACH, but these examples are intended solely for illustrative and non-limiting purposes.

For an operating mode transition from standby or idle to connected or active, a new random access design could be used to meet requirements of NR, such as coverage, numerology, frame structure, and network structure, with the possible incorporation of NR-cells. The overall procedure for standby or idle to connected or active state transitions could be similar to LTE, in which a UE randomly selects a preamble sequence out of a pool of sequences and follows a 4-step procedure (message 1: PRACH preamble; message 2: PRACH response; message 3: RRC connection request; message 4: RRC connection complete). Multiple UEs can select the same preamble on the same resources, so collision resolution may be needed, i.e., the operating mode transition is contention-based. In this example, the UE is not time aligned at the time of transmitting the preamble.

In LTE, besides operating mode transition from standby or idle to connected or active, random access can be used for other purposes under connected or active state, such as handover, positioning, synchronization when downlink data arrives, synchronization when uplink data arrives, and/or radio link failure recovery. Random access under all these use cases could also be based on a 4-step procedure which is contention-based. However, for at least two of these use cases (handover, synchronization when downlink data arrives), a 2-step contention-free procedure (message 1 and message 2 in the above example of a standby or idle to connected or active state transition) is adopted in LTE, where a dedicated preamble can be allocated to a UE, and hence preamble collision does not occur.

An "inactive" or "connected inactive" to connected or active state transition may also involve a new random access design. For example, unlike NR, LTE does not have an "inactive" or "connected inactive" UE operating mode. In the NR inactive or connected inactive operating mode, a UE context and identifier are preserved by the network, by a network element or a centralized processing system, for example. Hence, besides the 4-step contention-based procedure and the 2-step contention-free procedure with network allocated preamble as outlined above, a new 2-step procedure (message 1 and message 2 in the above example of a standby or idle to connected or active state transition, for example) could also be used to transition from inactive or connected inactive operating mode to connected or active operating mode. In an embodiment of a 2-step procedure, a UE derives a UE-dedicated preamble from its unique identifier. Examples of a UE unique identifier include a Cell Radio Network Temporary Identifier (C-RNTI) and a dedicated connection ID. Embodiments are not limited to only these identifiers. A UE-dedicated preamble could also be a function of NR-Cell ID. A derived UE-dedicated preamble might or might not be overridden by higher layer RRC signaling. Therefore, a UE may derive a UE-dedicated preamble or obtain a UE-dedicated preamble from RRC signaling, for example, such that its preamble is unique within an NR Cell, so collision can be avoided or controlled, i.e., the operating mode transition can be contention-free, or its contention can be controlled. In an inactive or connected inactive to connected or active operating mode transition, a UE can be not time aligned at all, coarsely time aligned, or even finely time aligned.

In another example, the UE dedicated preamble can be assigned by the network after the UE performs the RACH procedure in initial access. This random access procedure has only two steps since the detection of preamble automatically reveals UE identity.

The preceding paragraphs describe contention-free random access with a UE-dedicated preamble that can be a function a UE identifier, and 2-step LTE contention-free random access. In LTE contention-free random access, preambles are assigned by the network when necessary and the network knows when a UE will transmit its preamble.

In contention-free random access with a UE-dedicated preamble that can be a function of UE identifier, each UE's preamble is known or derivable by network components, but exactly when a UE will transmit its preamble is not known. To differentiate these two contention-free random accesses, LTE contention-free random access is referred to herein as solicited contention-free transmission, and contention-free random access with UE-dedicated preamble that can be a function of UE identifier is referred to herein as unsolicited contention-free transmission.

A 4-step RACH procedure with randomly selected preambles could also be used in inactive or connected inactive mode, for transition to connected or active mode or state for example.

The unsolicited contention-free transmission with dedicated preamble could be used not only in inactive or connected inactive mode, for state transition to connected or connected active mode for example, but also or instead in connected or active mode, for such purposes as handover, positioning, synchronization when downlink data arrives, synchronization when uplink data arrives, radio link failure recovery, etc. This illustrates another difference between unsolicited and solicited contention-free random access: unsolicited contention-free random access has more use cases than LTE solicited contention-free random access transmission. LTE solicited random access can only be used for handover and synchronization when downlink data arrives under connected or active state.

PRACH design may encompass different numerologies (subcarrier spacing, for example) and/or frame structures. In NR, currently 15kHz, 30kHz, 60kHz, and 120kHz subcarrier spacings are supported. On one frequency range, the PRACH can be designed for a default numerology (such as default subcarrier spacing) only, but it can also be designed for other numerologies (such as other subcarrier spacings) as well.

For each subcarrier spacing, two subframe lengths could be considered, such as 0.5ms and 1 ms subframe lengths for 15kHz subcarrier spacing, for example.

PRACH design could also or instead take into account other types of different frame structures, such as UL-only subframes and UL-dominant subframes.

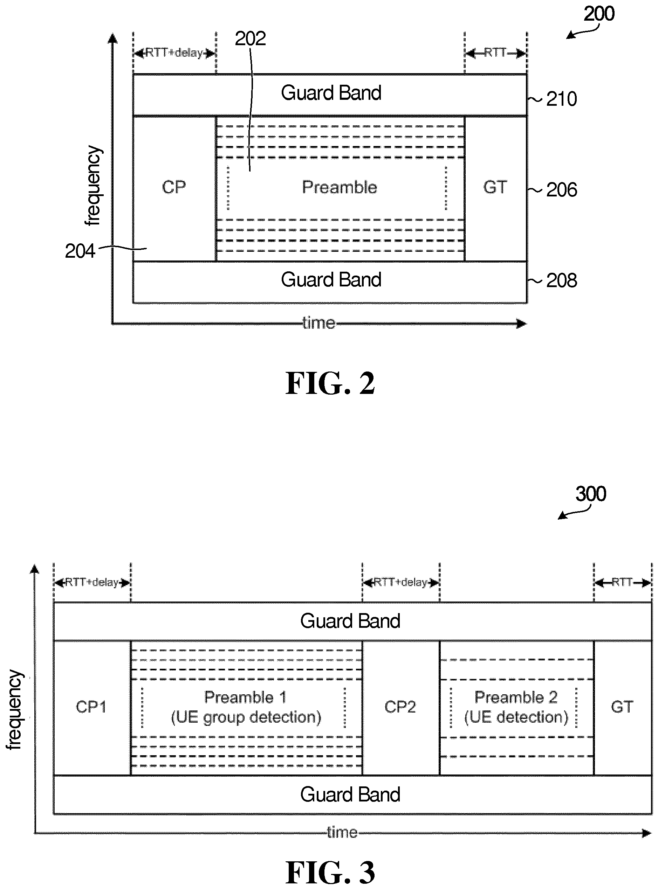

Fig. 2 is a block diagram illustrating an example PRACH frame structure. The PRACH structure 200 includes a preamble 202, a cyclic prefix (CP) 204, guard time (GT) 206, and guard bands 208, 210 including one or more PRACH subcarriers. The PRACH subcarriers have PRACH subcarrier spacing and are not data subcarriers, which may have different subcarrier spacing. Sequences with good auto-and cross-correlation properties could be used as preamble sequences, e.g., Zadoff-Chu (ZC) sequences as in LTE.

A single ZC sequence represents only an example. Other embodiments are also contemplated.

In an embodiment, a standby or idle mode PRACH in NR is similar to PRACH in LTE, but with possibly different preamble sequence length, CP/GT duration, and/or guard subcarrier number. The geographical coverage of an NR cell may be wider than a typical LTE cell and may contain multiple TRPs, and accordingly the number of UEs in an NR cell can be much higher than in an LTE cell. Consider random selection of preambles as used in standby or idle mode PRACH and possibly in inactive or connected inactive mode PRACH and/or possibly in connected or active mode PRACH. As noted, there could be a lot more UEs in an NR-Cell relative to an LTE cell, and therefore maintaining the same collision rate as in LTE which has a sequence pool size up to 64, would involve enlarging a sequence pool size in NR proportionally. As a result, blind detection complexity could become high. For unsolicited contention-free random access with UE-dedicated preambles as possibly used in inactive or connected inactive mode PRACH in NR, or used in connected mode or active mode, there could be a lot more UEs in an NR-cell than in an LTE cell as noted above, and consequently the number UEs in the inactive or connected inactive mode, or connected or active mode, could be large. In unsolicited contention-free random access under inactive or connected inactive mode, or connected or active mode, many hypotheses (with the number equal to the number of UEs in inactive or connected inactive state, or the number of UEs in connected or active mode) may need to be tested in preamble detection. As a result, detection complexity could be high. To summarize, it may be desirable to reduce detection complexity in NR for contention-based random access and unsolicited contention-free random access with UE-dedicated preamble.

Multi-stage preamble detection with multiple preambles may reduce the search space in preamble detection compared to a search space that includes all detection hypotheses for contention-based random access and unsolicited contention-free random access with UE-dedicated preamble in NR for their respective use cases. Use cases of contention-based random access include the following UE states: 1. idle or standby; 2. inactive or connected inactive; and 3. connected or active. Use cases of unsolicited contention-free random access include the following UE states: 1. inactive or connected inactive; and 2. connected or active. However, single preamble / single-stage detection is not necessarily precluded if the complexity can be handled at the network side.

It should also be appreciated that multi-stage detection could be implemented not only in NR as in some embodiments that are described by way of example herein, but also or instead in other applications in which reducing detection complexity could be beneficial. NR is an illustrative example embodiment.

In multi-stage preamble detection, each stage involves one preamble, so in an embodiment there are multiple preambles for message 1 instead of one preamble. Detection of a first preamble, for example, could determine which of a number of groups of UEs include connected or active UEs, or inactive or connected inactive UEs, or standby or idle UEs, that are transmitting preambles, and then detection of a second preamble could determine sub-groups of UEs within those detected groups that include UEs that are actively transmitting preambles, and so on, until detection of last preambles determines actual UEs that are actively transmitting preambles. Multi-stage preamble detection could involve two, or more than two, preambles. It should be noted that references to preambles as "first", "second", "last", etc. are intended simply to differentiate between preambles, and are not indicative of the actual order of preambles in either time or frequency. Preambles could be transmitted and/or received in any order. For example, a "first" preamble that is used to detect UE group could be transmitted after the "second" preamble.

References herein to UE groups are not intended to imply that UE groupings are known to the UEs. A network element and/or centralized processing system, for example, might manage UE group information and assign group / sub-group / etc. preambles to UEs or make group / sub-group / etc. preambles available for UEs to select from, but the UEs need not necessarily be aware of the group / sub-group / etc. to which they belong.

Two-stage detection could be a preferred embodiment of multi-stage detection, to realize a measure of complexity reduction while not imposing significant or complex structural changes or requirements to implement. For example, two-stage detection may involve designing two preambles, including a first preamble and a second preamble. UEs could be assigned a first "group" preamble or could select a first "group" preamble, and UEs that are assigned or select the same first preamble are said to be in the same UE group. The UEs in a group need not actually be located near each other or otherwise associated with each other. Each UE is also assigned a second "UE" preamble or could select a second preamble, which could be a globally unique preamble or unique within each group and re-used within different groups. In the first stage of preamble detection, the first preamble is detected to determine which UE groups are include UEs that are actively transmitting preambles, and then in the second stage the second preamble is detected to determine which UEs are actively transmitting preambles.

Consider an example of 100 UEs. Direct detection would have a search space of 100, while two-stage detection with 10 UE groups each with 10 UEs would have search space as small as 20 if only UEs within one group are actively transmitting preambles. In this example, the search space includes a group search space of size 10 and a UE search space of size 10 for the one group that includes UEs that are actively transmitting preambles.

Regarding preambles, a first preamble could be a ZC sequence that is shared by a group of UEs, and each UE could also be assigned or select a second preamble, which is unique to each UE at least within the group of UEs, and could also be a ZC sequence.

The first and/or second preamble could be sequences resulting from element-wise multiplying, on an element-by-element basis, a ZC sequence with some other sequence, such as an m-sequence. An m-sequence is a pseudorandom binary sequence, and could be BPSK (binary phase-shift keying) modulated, so that each entry in the sequence is either +1 or -1. The length of an m-sequence is $2^n-1$, where n is a positive integer. In the case of multiplying a ZC sequence by another sequence, a ZC sequence could be considered a base sequence, and the other sequence could be considered a cover sequence. The base sequences used in a first preamble and a second preamble, for example, could be the same ZC sequence or different ZC sequences, and similarly the cover sequences used to generate the first and second preambles could be the same or different as well. It is possible that only one base sequence (first or second) is element-wise multiplied with a cover sequence, while the other is not. For example, the first preamble of a UE group could be a ZC sequence, and the second preamble of a UE in this UE group could be generated by element-wise multiplying the same ZC sequence by an m-sequence. In this example, the ZC sequence could determine UE group, while the m-sequence determines the individual UE within the group, and the element-wise multiplied ZC sequence with m-sequence determines the individual UE among UEs in all the groups.

The first and/or second preamble could be sequences that result from sequence-wise multiplying the same base sequences with some other form of cover codes, such as orthogonal cover codes (OCCs). The base sequences used in generating the first and second preambles could be the same or different, and could be ZC sequences for example. The cover codes used in generating the first and second preambles could be the same or different as well. It is possible that only one base sequence (first or second) is multiplied with a cover sequence, while the other is not.

In a two-stage preamble detection scenario, one first "group" preamble is associated with a set of second "UE" preambles. Such association can be expressed in the following embodiments, which are intended to be illustrative and non-limiting examples:

1) For an embodiment in which the first "group" preamble and the second "UE" preamble are both ZC sequences, the first "group" preamble could be constructed as $x_{u,v}[n] = x_u[(n + C_v) \bmod N_{zc}]$, where $x_u[n] = e^{-j\frac{\pi u n(n+1)}{N_{ZC}}}$, $0 \le n \le N_{zc} - 1$ is the ZC sequence with root index u and length $N_{zc}$. The cyclic shift $C_v$ is given by multiples of the offset $N_{cs}$ between two preambles $C_v \begin{cases} vN_{CS} & v = 0,1,\dots \lfloor N_{ZC}/N_{CS} \rfloor - 1, N_{CS} \neq 0 \\ 0 & N_{CS} = 0 \end{cases}$. The "UE" preamble could be generated similarly with a different root and/or cyclic shift. The association between a "group" preamble and its "UE" preambles could be based on a table, for example, in which each row of the table indicates the mapping between one pair of root u and cyclic shift index v of a "group" preamble and a set of "UE" preambles. The set of "UE" preambles could be indicated by a root u2 and cyclic shift index v2 of the starting "UE" preamble of the set and a root u3 and cyclic shift index v3 of the ending "UE" preamble of the set, for example. In this case, any preamble with a root r that satisfies u2<r<u3, or with a root r=u2 and cyclic shift index s≥v2, or with a root r=u3 and cyclic shift index s<=v3 is one of the "UE" preambles associated with this "group" preamble.

2) For an embodiment in which the first "group" preamble is a ZC sequence and the second "UE" preamble is the result of the "group" preamble elementally multiplied by an m-sequence, the "group" preamble could be constructed similarly as in the above example. The "UE" preamble could be constructed as $E_w = \{x_{w,u,v}[n] = c_w[n] \cdot x_{u,v}[n]\}_{u,v}$ where $x_{u,v}[n]$ is the "group" preamble and $c_w[n]$ is an m-sequence. $c_w[n]$ could be constructed as $c_w[n] = c[(n - w)$ mod $N_{zc}]$, $0 \le n \le N_{zc}$ - 1, where $w = 0,1,... N_{zc}$ - 1 is a cyclic shift of the m-sequence and $c(n)$ is a base m-sequence which is obtained by a generator polynomial of order m. One example of a $7^{th}$ order polynomial is $g(D) = D^7 + D^3 +$ 1. Since $x_{w,u,v}[n]$ is generated from $x_{u,v}[n]$, it is the associated "UE" preamble of the "group" preamble $x_{u,v}[n]$.

3) For an embodiment in which the first "group" and second "UE" preambles are both ZC sequences, and an OCC is used across these preambles, the ZC sequences of each preamble could be the same and could be constructed similarly as in the above examples. An OCC is sequence-wise multiplied to each preamble sequence, i.e., cover code "+1" or "-1" is multiplied to the "group" preamble and cover code "+1" or "-1" is multiplied to the "UE" preamble. In this example, the ZC sequence covered by either "+1" or "-1" each marks one UE group, and each group has a "UE" preamble set of size 2 (same ZC sequence either covered by "+1" or "-1"). Note in this example, the "UE" preambles of each group are fully reused. The number of UE groups and size of each group depend on the type of the OCC. For example, if a quadruple code (1+j, 1-j, -1+j, -1-j) instead of a binary code (+1, -1) is used, then the number of UE groups and group size are each 4. If more than two preambles are allowed in two-stage detection, the group number and UE group size are further determined by the number of preambles in each stage. For example, under the binary OCC case with 5 preambles in message 1, the first and second preambles together form the "group" preamble, and the third, fourth, and fifth preambles together form the "UE" preamble. In this case the number of UE groups is 2^2 = 4, and the size of each UE group can be 2^3=8.

Two-stage preamble detection is an illustrative example of multi-stage preamble detection. Other embodiments could use more than two preambles, any or all of which could be generated based on sequences as described herein. More generally, features disclosed herein with reference to two-stage detection and two preambles could be extended to multi-stage detection and multiple preambles.

Figs. 3 to 6 show examples of different time/frequency structures of a first preamble and a second preamble for two-stage preamble detection. These examples, as well as the example in Fig. 2, are illustrative of different frame formats that could be used in a random access procedure. A random access procedure could be, for example, a contention-free channel reconnection procedure, for a UE to transition from an inactive or connected inactive operating mode to a connected or active operating mode. A random access procedure could involve other operating mode or operating state transitions, to or from connected or active, or inactive or connected inactive, standby or idle, and/or other operating modes or states. Not every random access procedure necessarily involves any operating mode or state transition at all, in the case of a handover for example.

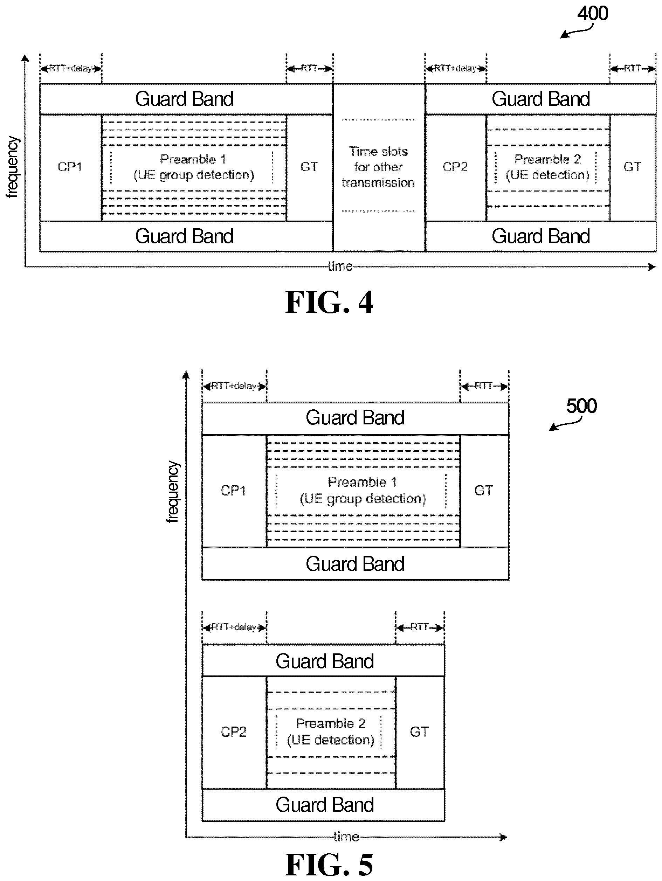

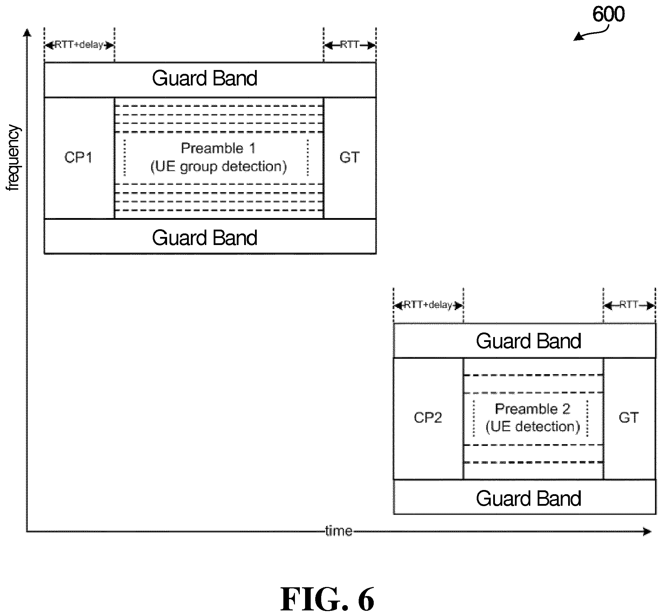

In the frame structure 300 in Fig. 3, a second preamble follows a first preamble in the same subframe and in the same subband. The frame structure 400 in Fig. 4 is a frame structure in which a second preamble and a first preamble are in the same subband, but in different subframes. In the frame structure 500 in Fig. 5, a second preamble and a first preamble are in the same subframe but in different subbands. Finally, in the frame structure 600 in Fig. 6, a second preamble and a first preamble are in different subframes and in different subbands. In two-stage detection, the two preambles could also or instead have different subcarrier spacing due to difference in duration, and/or otherwise different numerologies.

Although the frame illustrated in Fig. 3 is used herein as an illustrative embodiment, other frame formats could also or instead be used. It should again be noted, as above, that "first" and "second" in reference to preambles is not intended to invoke a requirement that the preambles are transmitted or received in that order in time, even though this is shown by way of example in Fig. 3. It is noted that for multi-stage detection with more than two preambles, there could be similar frame flexibility as in Figs. 3 - 6. Numerologies between more than two preambles could also be different.

With regard to time domain design of PRACH frames, design principles could be similar to LTE. For example, the time domain design of PRACH frames could consider max round trip time (RTT) and max delay spread in the worst case scenarios, which results in a lower bound time duration. Unlike in LTE, however, in NR the worst case RTT takes into account that multiple TRPs might receive the same preamble and perform joint reception.

Regarding max RTT, LTE supports up to 100km cell radius. Similar maximal coverage could be supported in NR. In NR, more than one TRP within an NR-cell may receive the same preamble and the network, at a centralized processing system for example, could then perform joint reception. In this case, assuming one tier of cells can hear a UE, and cell radius is 5km, the max range of the preamble is 2*5km = 10km. RTT is set accordingly, at 2*10km/(3*10^8) = 66.67 microseconds (us).

For max delay spread, the CDL-C model (Cluster Delay Line (CDL) channel mode, in a sub-category of "urban macro" channels) has up to 7.1 us delay spread (for WINNER II, D1.1.2, V1.1, WINNER II Channel Models, CDL-C3, bad urban macro-cells). The preamble duration lower bound is thus determined in an embodiment by RTT plus max delay spread, which in this example is 73.77us.

In NR, this lower bound constraint could apply to standby or idle mode UEs and inactive or connected inactive mode UEs that are not timely aligned. However, in inactive or connected inactive mode, some UEs may already have some level of timing alignment. In this case, the preamble duration lower bound could be relaxed, e.g., reduced but still larger than max delay spread.

Coverage performance of NR is different from LTE, and may be used to design an upper bound of preamble time duration. A typical coverage range in NR is obtained by assuming a subframe duration of PRACH and a target $E_p/N_0$

$$E_p/N_0 = P_{max}*Propagation*T_{seq}/N_0/N_f \qquad (1)$$

where $P_{max}$ is UE max power, $T_{seq}$ is rough preamble duration, $N_0$ is noise density, $N_f$ is noise figure. As an example, for a target of 18dB $E_p/N_0$, $P_{max}$ = 23dBm, UL-only subframe with $T_{seq}$ = 1 ms, $N_0$ = -174dBm, and $N_f$ = 5dB, propagation in this case is - 144dB.

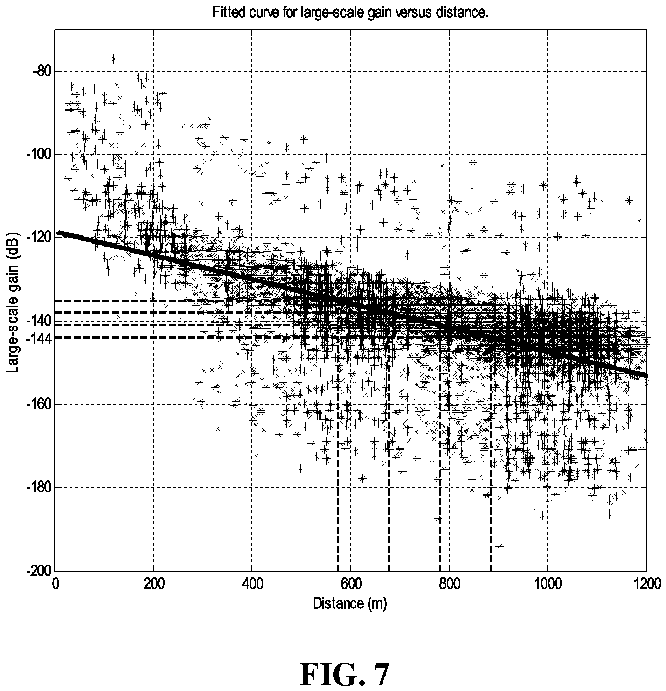

For mapping from propagation to range, LTE uses an empirical Okumura-Hata mode. For NR, a first order polynomial fitted curve generated from empirical data of dense urban scenario for design (including effect of path-loss, shadowing, antenna gain, etc.) could be used. In the example fitted curve shown in Fig. 7, the corresponding range for propagation of -144dB is 885m. Fig. 7 is based on system-level simulation results, but different results could be observed under similar or different simulation conditions and/or during operation.

A standby or idle mode PRACH frame structure similar to LTE could be considered. NR frame structure types could be considered in design, e.g. whether a UL only subframe or a UL dominant subframe. For a UL-only subframe, the preamble duration upper bound could be Tseq - 2*RTT. For a UL-dominant subframe, the upper bound could be $T_{seq\ of\ the\ UL}$ portion-2*RTT, where RTT = 2*range/(3*10^8)=2*885/(3*10^8). In these examples, we have 2*RTT, for embodiments in which there is 1 CP and 1 GT, where each of them absorbs RTT. With a UL-only subframe with 1 ms duration, the upper bound is computed as 988.2us in this example.

For a PRACH with two-stage detection (two preambles), the duration of each preamble could be roughly half of that in single-stage detection. The $T_{seq}$ used in eq(1) is 0.5ms in an embodiment, which in turn results in Propagation in this case of -141 dB. In the example fitted curve shown in Fig. 7, the corresponding range for propagation of -141dB is 781 m. Then RTT is 2*781/ (3*10^8). For an uplink only subframe, the preamble duration upper bound could be determined as $T_{seq}$ - 3*RTT. For a UL-dominant subframe, the upper bound could be determined as $T_{seq\ of\ UL}$ portion - 3*RTT. In these examples, we have 3*RTT since we have 2 CPs and 1 GT in the case of two preambles for the format example in Fig. 3, where each of the CP and GT absorbs RTT. With a UL-only subframe with 1 ms duration, the upper bound is computed as 982.3us in this example.

For a UE that is in inactive or connected inactive mode and already has some level of timing alignment, this upper bound constraint could be relaxed, i.e., increased.

Similar to LTE, subcarrier spacing compatibility could be considered in time domain design for NR.

Besides being within a lower bound and an upper bound, but preferably closer to the upper bound in order to have longer sequences, PRACH subcarriers could be 1/k (k is an integer) of data subcarrier spacing. Equivalently, PRACH duration could be an integer multiple of data OFDM symbol length in some embodiments.

For example, assume 15kHz subcarrier spacing (66.67us symbol duration) and a lower bound of 73.77us. With an upper bound of 988.2us in an example above for an idle mode PRACH, preamble sequence length is 933.33us, equivalent to 14 data symbols in length with subcarrier spacing 15kHz/14. With an upper bound of 984.38us in an example above for an inactive or connected inactive mode PRACH, total preamble sequence length is again 933.33us, which is the sum duration of two preambles in two-stage detection.

For inactive or connected inactive mode UEs that are finely timely aligned, the duration upper bound could be relaxed. However, in an embodiment, even for inactive or connected inactive mode UEs that are finely timely aligned, 14*66.67us = 933.33us could still be applied as the maximum sequence duration. In this example the sequence duration cannot be further enlarged since (14+1)*66.67us = 1 ms occupies the entire sub-frame.

For 2-stage PRACH detection, there are two preambles, or in other words a full preamble includes, or could be divided or separated into, two sequences. The subcarrier spacing of the two preambles can be different. Each sequence is an integer multiple of data symbol length in an embodiment. However, the difference of sequence duration for the two preambles may be limited, as the minimum of the durations of the two preambles determine their typical coverage performance used in eq(1). In an example with a preamble equivalent to 14 data symbols in time, if the first preamble is equivalent to x (x is integer and 1<=x<=13) data symbols in time, the second preamble is equivalent to 14-x data symbols in time. With x=10, for example, the subcarrier spacing of the first preamble is 15kHz/10, and duration is 666.67us, while subcarrier spacing of the second preamble is 15kHz/4, and duration is 266.67us.

However, in NR, PRACH duration might not be an integer multiple of data symbol length, and PRACH subcarrier spacing might not be 1/k of data subcarrier spacing, depending on hardware implementation. In this case, determination of preamble time duration could be flexible, as a preamble does not need to be an integer multiple of a data OFDM symbol, and could instead be an integer multiple of $T_s$, for example.

After determining the preamble time duration, the sum of CP and GT duration can be determined, and quantized to a number of $T_s$ (which is a basic time unit in a communication system). In an embodiment, CP absorbs RTT and delay spread, while GT only absorbs RTT as in LTE (see Fig. 3). For 1ms duration and 7.1us delay spread, the following paragraphs describe computation of CP and GT and max supported cell radius in an embodiment.

In an embodiment, similar to LTE, there is one CP and one GT:

$$T_{CP} = (T_{CP+seq+GT} - T_{seq})/2 + \text{delay\_spread}/2 = (1000\text{-}933.33)/2 + 7.1/2 = 36.88\text{us},$$

after quantizing to an integer multiple of $T_s$ $((1/(15000*2048))*10^6)$ it is $1133*T_s$

$$T_{GT} = (T_{CP+seq+GT} - T_{seq})/2 - \text{delay\_spread}/2 = (1000\text{-}933.33)/2 - 7.1/2 = 29.78\text{us},$$

after quantizing to an integer multiple of $T_s$ it is $915*T_s$. The max supported cell radius is calculated based on GT to be 29.78us * 3*10^8 / 2 = 4.47km.

The actual supported delay spread in this example is $T_{CP} - T_{GT} = 7.1\text{us}$.

For 2-stage detection, there are two CPs and one GT (where a second preamble follows a first preamble within one subframe and subband as in Fig. 3):

$$T_{CP} = (T_{CP+seq+GT} - T_{seq})/3 + \text{delay\_spread}/3 = (1000\text{-}933.33)/3 + 7.1/3 = 24.59\text{us},$$

after quantizing to an integer multiple of $T_s$ it is 755*Ts

$T_{GT} = (T_{CP+seq+GT} - T_{seq})/3 - 2*\text{delay\_spread}/3 = (1000\text{-}933.33)/3 - 2*7.1/3 = 17.49\text{us}$, after quantizing to an integer multiple of $T_s$ it is 537*Ts. Since in this case $2*T_{CP} + T_{GT} = 2*755+537 = 2047 < 2048$ (CP and GT in this example should be equal to one data symbol (2048 Ts in this case) in time, since the entire PRACH resource in this embodiment is equal to 15 data symbols in time and 14 of them are used for preamble), we set $T_{GT}$ to be 538$T_s$. The max supported cell radius is calculated based on GT to be 538$T_s$ * 3*10^8 / 2 = 2.63km.

Actual supported delay spread in this example is $T_{CP} - T_{GT} = 7.0638\text{us}$.

Similar to LTE, in NR PRACH could have multiple different time domain designs, to accommodate different scenarios such as dense urban, rural, etc., with different RTT and delay spread characteristics and different types of UEs, such as low speed, high speed, etc. The time domain design of PRACH could span one subframe, or multiple subframes.

Frequency domain design and cyclic shift dimensioning may also or instead be considered in PRACH design.

LTE has a fixed 6 resource blocks (RBs) of PRACH, where 6 RB is optimized through link-level simulation. In NR, one fixed PRACH bandwidth may be considered. For UEs in inactive or connected inactive state, or in connected or active state, different PRACH bandwidth could be considered for different UE profiles (low speed, high speed, etc.) and different scenarios (dense urban, rural, etc.), since UE context is already known at the network. For example, with the same sequence length, high speed UEs may prefer wider bandwidth (with shorter time duration to reduce time interruption).

For each bandwidth, preamble sequence length (Nzc) could be determined along with the time domain design. For example, consider an embodiment in which 6 RB are used (same as LTE). From a previous design example where PRACH preamble has a duration equivalent to 14 data symbols, the max sequence length is 6*12*14=1008 (where 12 is the number of data subcarriers per RB, and 12*14 is the number of PRACH subcarriers per RB). If a Zadoff-Chu sequence is used for the preamble, Nzc = 997 could be chosen as the actual sequence length as it is the max prime number below 1008. If other sequences are used, sequence length can be properly selected to be a number smaller than or equal to 1008. The Nzc notation herein is designated to be "sequence length of Zadoff-Chu sequence". More generally, "sequence length" refers to any type of sequence, including Zadoff-Chu sequences and other types of sequences.

In this example of $N_{zc}$ = 997, there are 1008-997=11 guard subcarriers. For two-stage detection, since there are two preambles one could assume the first preamble has a length of x=10 data symbols and the second preamble has a length of 14-x=4 data symbols. The max sequence length for the first preamble is 6*12*10=720, so Nzc1 = 719 could be chosen as the actual first sequence length with 1 guard subcarrier if a Zadoff-Chu sequence is selected for a preamble. If other sequences are selected, sequence length can be properly selected to be a number smaller than or equal to 720. The max sequence length for the second preamble is 6*12*4=288, and Nzc2 = 283 could be chosen as the actual second sequence length with 5 guard subcarriers if a Zadoff-Chu sequence is selected for a preamble; if other sequences are selected, sequence length can be properly selected to be a number smaller than or equal to 288.

If Zadoff-Chu sequence is chosen for preamble in NR, cyclic shift lower bound design could be similar to LTE. Minimum cyclic shift (Ncs) for Zadoff-Chu sequence could be computed based on RTT, delay spread, and speed requirements. For medium and low speed cases:

$$Ncs >= ceil((2*radius/3*10^8 + max\_delay\_spread)/Tseq*Nzc) + 2,$$

where 2 is the number of additional guard samples due to receiver pulse shaping filter used in LTE (which may or may not be the same in NR). The cyclic shift Ncs may be different for multiple preambles.

In an embodiment, max_delay_spread is 7.1 us, $T_{seq}$ = 933.33us, Nzc = 997, for max radius = 4.47km, Ncs is lower bounded by 42. For PRACH with 2-stage detection and 2 preambles, the first preamble has a duration of 666.67us (with length of x=10 data symbols), Nzc1 = 719, for max radius = 2.63km, and Ncs1 is lower bounded by 29, and the second preamble has a duration of 266.67us (with length of 14-x=4 data symbols), Nzc2 = 283, for max radius = 2.63km, and Ncs2 again has the same lower bounded of 29.

If Zadoff-Chu sequence is chosen for preamble in NR, for radius that is shorter than the max supported radius, Ncs could be smaller. For high speed scenarios, similar to LTE, a restricted set of Ncs could be determined. Multiple candidate values could be configured for Ncs, to fit different coverage requirements. For coverage that is below a largest possible coverage, an Ncs that is larger than its lower bound Ncs could be used to make sequences more robust (cross correlation between sequences becomes lower).

The maximum PRACH pool size for unsolicited contention-free random access with UE-dedicated preamble could be determined based on Nzc and Ncs if a Zadoff-Chu sequence is chosen for a preamble; if other sequences are chosen, PRACH pool size could be determined based on corresponding sequence length. The PRACH pool size for contention-based random access could be larger than 64 (in LTE) and upper bounded by the maximum pool determined by unsolicited contention-free random access with UE-dedicated preamble.

With two-stage preamble detection, for example, the length of the first preamble determines the maximum number of UE groups that can be supported, per time/frequency resource, without contention. In an embodiment with a Zadoff-Chu sequence for the first preamble, Nzc1 =719, there are 718 base sequences, with the max lower bound of Ncs1 (29), each root has floor(719/29) = 24 sequences. The maximum supported number of UE groups without contention in this example is 718*24=17232.

The length of the second preamble determines the maximum number of UEs/sequences per UE group without contention. In an embodiment with a Zadoff-Chu sequence for the second preamble, Nzc2=283, there are 282 base sequences, with the max lower bound of Ncs2 (29), each root has floor(283/29)=9 sequences. The maximum supported number of UEs per UE group without contention in this example is 282*9=2538. In another embodiment where an m-sequence covered Zadoff-Chu sequence (with the same Nzc2 = 283) is adopted for the second preamble and the second preamble is the first preamble element wise multiplied by an m-sequence, the maximum supported UE number per group is determined by the m-sequence as NumberOfMSequence, where NumberOfMSequence can be as large as the maximum number not larger than Nzc2=283 that is both a prime number and in the form of $2^n-1$ where n is a positive integer. In this example, NumberOfMSequence is 127.

In two-stage detection, reusing the second preambles in different UE groups could lead to ambiguity in detection. Consider an example in which UE A1 in group A and UE B1 in group B have the same second preamble, and UE A2 in group A and UE B2 in group B have the same second preamble. When a TRP or other network equipment detects these two second preambles, it might not differentiate the following two possibilities: 1) UEs A1 and B2 are actively transmitting their preambles; 2) UEs A2 and B1 are actively transmitting their preambles. However, it might still be possible to resolve ambiguity in detection. Using geographical information, for example, the network may resolve the ambiguity by only (partially) reusing the second preambles for UE groups that are far away from each other, since TRPs that detect UEs in different, geographically separated UE groups would be different. Thus, in an embodiment, each UE group only partially reuses preamble sequences.

Another option is to completely avoid ambiguity in detection, and each UE group has a respective distinct set of second preambles. In this case, the second preamble determines the maximum number of UE sequences in an entire NR cell, not just the maximum number in each UE group. From an example above where the maximum supported number of UEs per UE group without contention is 2538 with a ZC sequence, if there are in total 2500 UEs in inactive or connected inactive mode in an NR cell and 100 UE groups are configured with 100 first preambles out of all possible 17232 sequences in another example above, then for each UE group 25 second preambles could be configured.

In an embodiment, the first preamble is a Zadoff-Chu sequence, and the second preamble is a result of the same Zadoff-Chu sequence element-wise multiplied by an m-sequence. Since in each group of UEs, the base Zadoff-Chu sequence in second preamble is different from other groups of UEs, each UE group has a respective distinct set of second preambles, so there is no detection ambiguity.

In such an embodiment, the first preamble for UEs within a group is a ZC sequence, with a given root and cyclic shift. The second preamble of UEs within a group is the result of the same base ZC sequence element-wise multiplied by an m-sequence, with different cyclic shifts of this m-sequence for different UEs in this group. The different cyclic shifts of the m-sequence generates a different second preamble for each of the UEs within the group. Two-step detection could then involve, in a first stage, detecting the first preamble. In a second stage, the covered sequence (second preamble) could be directly detected. The received covered sequence could instead be scrambled with (element-wise divided by) the detected first preamble sequence from the first stage, to recover and detect the m-sequence.

Element-wise multiplication of some ZC sequences with some m-sequences may result in sequences with higher PAPR. Some embodiments could involve limiting the possibilities of combined first/second preambles to those that are expected to result in low PAPR in the second preamble, and/or to satisfy other conditions. This could be done by offline numerical evaluation. Then, for example, the accepted combinations of ZC and m-sequence can be used for UE dedicated preambles, and notified to UEs via a broadcast channel or RRC signaling. For example, at least a certain number of first preamble sequences could be provided for any given root, so that there are sufficient different roots to be used in different cells.

Comparing two-stage detection to single-stage detection with respect to the maximum number of supported UEs, where UE groups fully reuse preamble sequences, two-stage detection has a higher maximum number of supported UEs as the number equals a product of the supported number of UE groups in the first preamble and the supported number of UEs in the second preamble. Where each UE group has distinct preamble sequence sets, however, two-stage detection has a lower maximum number of supported UEs as compared to single-stage detection, as the maximum number of supported UEs for two-stage detection equals the supported number of UEs in the second preamble. That maximum number, however, could still be large enough to cover UEs in an NR cell in practice. In an embodiment with Zadoff-Chu sequences used in preambles, if single-stage detection with only one preamble detection is chosen, Nzc=997, with the same Ncs=29, the maximum supported number of UEs is floor(997/29)*996 = 33864. For two-stage detection where the first and second preambles are ZC sequences in an embodiment described above, 1) with full reuse of second preambles in different UE groups, the maximum number of supported UEs among all UE groups is determined by both the first and second preambles to be 17232*2538=43734816, where 17232 and 2538 are from a previous example; 2) to completely avoid detection ambiguity by not reusing second preambles in different UE groups, the maximum number of supported UEs among all UE groups is determined by the length of the second preamble, which is only 2538. However, 2538 could still be considered large enough to cover all UEs in an NR cell in practice, and the number could be increased, for example, by configuring longer second preambles but shorter first preambles. For two-stage detection where the second preamble is the first preamble element wise multiplied by an m-sequence, the maximum supported UE number per group is determined by the m-sequence to be 127 in another example above, and since there is no detection ambiguity the maximum supported UE number among all UE groups is 17232*127=2188464.

Regarding detection complexity, in most cases two-stage detection has a lower complexity than single-stage detection. For example, assume that there are 2500 UEs in an NR cell in inactive or connected inactive mode. For single-stage detection, the search space is 2500; for two-stage detection with no second preamble reuse among UE groups, assuming 100 UE groups and 25 UEs per group, if g number of groups have active UEs that are transmitting preambles, then the search space is 100+g*25. If g<96, then two-stage detection would have lower complexity that single-stage detection.

With more UE groups, first stage detection complexity increases, but the number of detections in the second stage can be reduced. After first stage detection, it is possible that more UEs that are not transmitting preambles are removed from detection in the second stage. Thus, there is a tradeoff between the number of UE groups and complexity (total detection number in the two stages). An optimal number UE groups could be determined to minimize the number of total detections. This optimal number of UE groups could vary, for both dedicated preambles and random preamble selection, according to the number of UEs that are simultaneously accessing the network in an NR cell and the total number of hypotheses that a detector has to blindly detect, and could be obtained by numerical evaluation. Hence, for the purpose of complexity optimization, UE grouping could be adjusted according to long-term statistics of simultaneously accessing UEs and the total number of blind detection hypotheses. Such adjustment could be applied by network equipment, through RRC signaling to assign new first "group" preambles to UEs (e.g., for unsolicited contention-free random access with UE-dedicated preamble of connected or active state UEs, or of inactive or connected inactive state UEs), or through system information broadcast in a broadcast channel to inform UEs of the updated preamble pool of both stages and the association between the first and second preambles (e.g., for contention-based random access of inactive or connected inactive state UEs, or of idle or standby state UEs, or of connected or active UEs). For example, and RRC signal that includes a different first sequence associated with a different group of UEs could be transmitted to a UE in order to associate the UE with a different group of UEs. A sequence update could also or instead involve broadcasting an updated pool of associations between the first sequence and the second sequence.

Regarding detection performance, two-stage detection should have a lower false-alarm rate than single-stage detection. For a UE that is not transmitting a preamble to be detected as "transmitting preamble", it would need to pass both stages of detection, which has lower likelihood than passing a single detection stage.

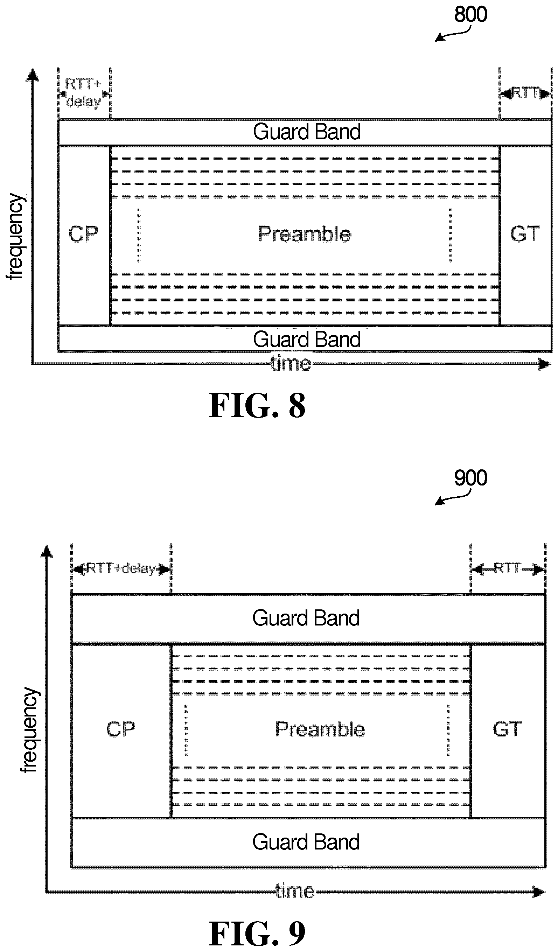

Turning now to preamble formats and resource mapping, PRACH in NR has multiple formats in an embodiment, each with a different time/frequency domain design, and possibly with different preamble sequence length. Different formats could be used for different scenarios, such as dense urban, rural, etc., and/or UEs with different profiles, such as low speed, high speed, etc. Fig. 8 is a block diagram of an example PRACH frame format, and Fig. 9 is a block diagram of another example PRACH frame format for single-stage preamble detection. For each format, there could be multiple resource mapping configurations.

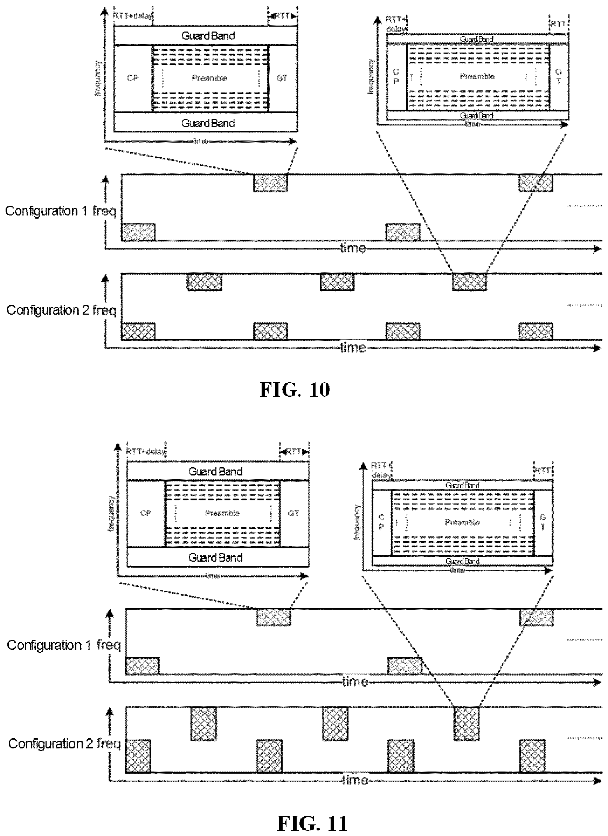

For contention-based random access of idle or standby UEs, each configuration of a format could have different periodicity in time. Different from LTE, each configuration may occupy more than one frequency location, as in Fig. 10. As a result, more resources are available for PRACH so collision rate can be lower. A UE selects any PRACH resource within each configuration to transmit. For inactive or connected inactive UEs, or connected or active UEs that also use contention-based random access, the UEs can share the same configuration with that of idle or standby UEs.

For UEs in inactive or connected inactive state or in connected or active state with unsolicited contention-free random access, UE profiles are already known by the network. Different bandwidth can be used for PRACH, so resources in different configurations can have different bandwidths to fit UEs with different profiles as in Fig. 11, and each configuration of a format could have different periodicity in time and can occupy more than one frequency location. Again, a UE selects any PRACH resource within each configuration to transmit.

With co-existence of single-stage and multi-stage detection for PRACH, it is possible that two types of PRACH may (partially) overlap in time-frequency resources. In this case, network equipment could detect preambles from both types of PRACH simultaneously in these overlapped resources.

In LTE, PRACH format and resource configuration are cell-specific configured and signaled to UE via broadcast channel. In NR, they could be NR-cell specific configured instead, and signaled to UEs via broadcast channel.

Preamble sequence assignment, for idle mode PRACH for example, could be similar to LTE if Zadoff-Chu sequences are used. In an embodiment, sequences in pools of each NR cell are generated from a base sequence (with a given root index) by shifting one Ncs each time, and the root is increased when all the shifts of the base sequence are used. If other sequences (not Zadoff-Chu) are to be used, the sequence pool of each NR cell could be generated with the consideration that all sequences in pool have low cross correlation. UEs randomly select one sequence from this pool.

In inactive or connected inactive state, or in connected or active state, UE context and ID are known. A preamble sequence, which could be the only preamble for single-stage detection or the UE sequences for multi-stage detection, can be derived from the dedicated UE ID, but could also be a function of NR-cell ID and/or other higher layer signaling. In one embodiment, if the UE ID has a "zone" or similar field, and if the first preamble denotes the UE groups that are geographically close to each other, then this field could be mapped to the first preamble. As a UE moves, the network monitors any UE zone changes, via a tracking channel for example, and reassigns the UE ID zone field accordingly through UE-specific RRC signaling. A moving UE's first preamble thus updates as the UE moves. The map from UE ID zone (or similar) field to first preamble could be designed such that the first preamble used in adjacent zones/UE groups have the same root, to reduce interference. Other fields of UE ID could be mapped to the second preamble for two-stage preamble detection.

In one embodiment, as described above, UE grouping could be changed in an effort to optimize or reduce detection complexity, so for the 2-stage detection new 'group' preambles could be assigned to UEs via UE-specific RRC signaling for unsolicited contention-free random access with UE-dedicated preamble, for example. Since the 'group' preamble determines UE grouping, the UE grouping would change accordingly.

The preceding paragraphs discuss two embodiments that may involve inactive or connected inactive mode UEs and RRC signaling. A difference between these embodiments is a purpose of the group preambles, which in one case is UE location tracking and in the other case is for complexity reduction.

UE grouping could also or instead be adjusted through a broadcast channel. For preambles that are randomly selected in contention-based random access, for example, the network could broadcast system information containing new first "group" preambles and their corresponding associated set of second "UE" preambles (so that UE grouping is changed), and a UE could then monitor system information in a broadcast channel, for new preambles to select from. A UE may then randomly select one of the new preambles or a new first/second preamble pair from the system information in the broadcast channel.

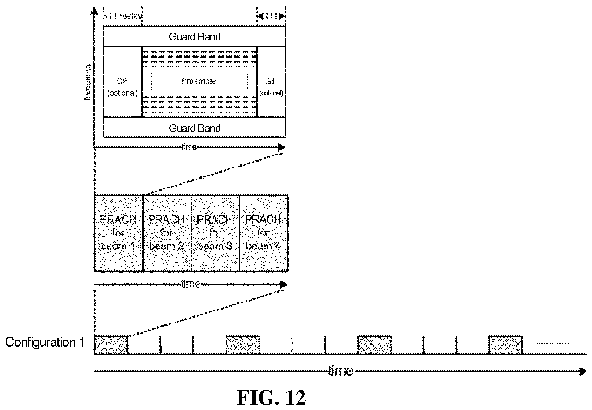

In the case of high-frequency PRACH, multi-beam sweeping could be employed in PRACH transmission, as shown in Fig. 12. If correct beam direction is not currently known at a UE, a PRACH frame could be repeatedly transmitted in different directions, each using a different resource (time/frequency, etc). The repeated PRACH can be in the same subframe as in Fig. 12, or in multiple different subframes. However, if beam tracking is enabled, in inactive or connected inactive mode for example, then the best beam direction may be known at the UE, and PRACH transmission can be the same as otherwise described herein without repeated transmissions. If beam tracking is not enabled or beams are not finely tracked, again beam sweeping could be used and a PRACH frame is repeatedly transmitted in different directions, each using a different resource (time/frequency, etc).

The description above concentrates primarily on PRACH frames of message 1. In response to a PRACH frame of message 1, a PRACH response is generated by a receiving network element, such as a TRP. A PRACH response, or RAR, is message 2 of the PRACH procedure.

As mentioned earlier, it is possible for multiple TRPs to receive a preamble from one UE and to do joint reception. In this case an RAR could be sent from any one of these TRPs, or even from a TRP that does not receive the preamble at all. The TRP(s) sending the RAR could be configured to be a macro TRP with higher power or TRPs that are closer to the UE, for example.

A RAR for a standby or idle mode UE could be similar to LTE, with the UE looking for a RAR at time-frequency resources associated with the time/frequency resource where the UE sends its preamble. Messages 3 and 4 for a standby or idle mode UE could also be similar to LTE.

A UE that already has a dedicated ID could look for a RAR at time-frequency resources that are mapped from its dedicated ID.

PRACH procedures could include other features, such as power control, for example. In an embodiment, open-loop power control is adopted, with full power compensation to enhance PRACH frame receive quality at a network element:

$$P_{PRACH} = \min(P_{MAX}, PREAMBLE\_RECEIVED\_TARGET\_POWER + PL)$$

where PL represents path loss, and PREAMBLE_RECEIVED_TARGET_POWER can be ramped up if previous PRACH transmission fails by setting a preamble transmission counter and a ramping step as in LTE, until maximum transmit power $P_{MAX}$ is reached.

NR might also be open to other options of power control, such as partial power compensation:

$$P_{PRACH} = \min(P_{MAX}, PREAMBLE\_RECEIVED\_TARGET\_POWER + x*PL),$$

where x determines how much path loss is compensated, and could be positive or negative.

Further power control techniques could be used for PRACH, especially in the inactive or connected inactive state. One embodiment uses a closed loop power control scheme, such as

$$P_{PRACH} = \min(P_{MAX}, PREAMBLE\_RECEIVED\_TARGET\_POWER + x*PL + UE\_SPECIFIC\_POWER\_BOOST)$$

where the parameter UE_SPECIFIC_POWER_BOOST is a user specific parameter set by the network and signalled to the UE. In an embodiment, this value is signalled to the UE while tracking the UE in the inactive or connected inactive state.

Since in NR-cell there is no TRP-dedicated RS or SS, all reference signal (RS) and synchronization signal (SS) are NR-cell-specific. If Single Frequency Network (SFN) is adopted for the transmission of RS and SS, the UE measured received power is the sum of all powers from TRPs in the NR cell. Hence the UE measured RS or SS strength does not represent path loss anymore, but rather the overall received power for SS as a metric. Network-centric or UE-centric parameters could be configured to decide how to scale this metric for power control. One example is

$$P_{PRACH} = \min(P_{MAX}, PREAMBLE\_P0 + x*SS\_Rx\_POWER)$$

where SS_Rx_POWER is the measured received power and PREAMBLE-P0 is the nominal power on preamble. In this example, PL need not be known, and power control relies on the measured received power. In another embodiment, a closed loop mechanism is used, such as

$$P_{PRACH} = min(P_{MAX}, PREAMBLE\_P0 + x*SS\_Rx\_POWER+ UE\_SPECIFIC\_POWER\_BOOST),$$

which also does not rely on PL. In this example, UE_SPECIFIC_POWER_BOOST is a power boost parameter that is UE specific and in some embodiments is signaled to the UE by higher layers.

The power control for PRACH may be tied to the power control used for SRS used in tracking. For example, $P_{PRACH}$ = min($P_{MAX}$, TRACKING_SRS_POWER + UE_SPECIFIC_POWER_BOOST + NETWORKS_SPECIFIC_POWER_BOOST) where TRACKING_SRS_POWER is the power used by UEs for SRS and NETWORK_SPECIFIC_POWER_BOOST is a network wide parameter signalled to multiple UEs in the network. In some embodiments, neither of the user-specific and network specific parameters are used. In some other embodiments, only one of the two parameters is used and in some embodiments both user specific and network specific are used.

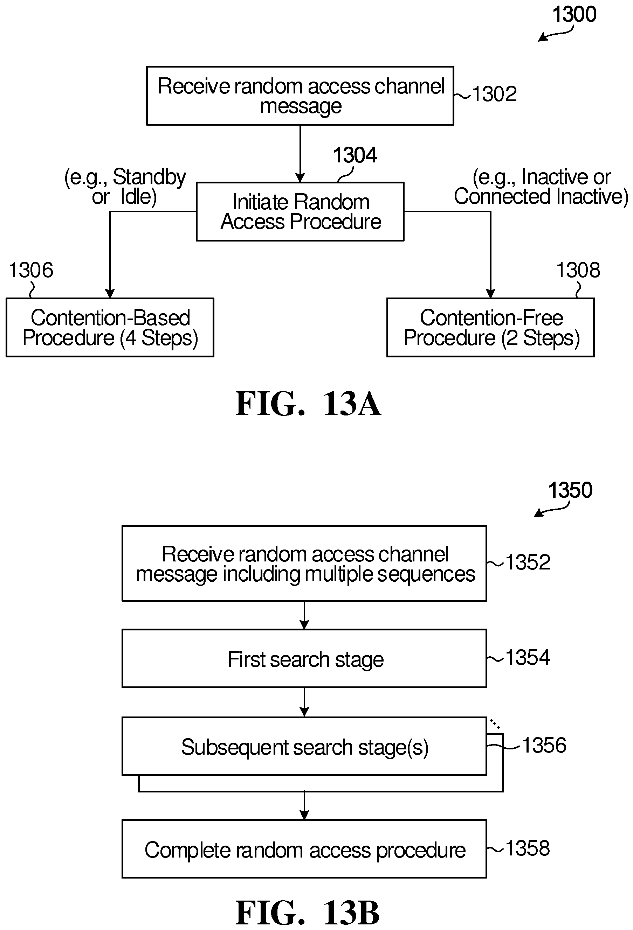

Fig. 13A is a flow diagram illustrating an example random access channel message processing method. The example method 1300 involves, at 1302, receiving at a network element a random access channel message from a UE. The random access channel message could be in any one of a number of different message formats, examples of which are disclosed herein. As also disclosed herein, the random access channel message could include multiple sequences, such as a first sequence associated with a group of UEs that includes the UE and a second sequence associated with the UE. At 1304, in the example method 1300 a random access procedure is initiated in response to the random access channel message. The random access procedure enables the UE to access the random access channel.

The random access procedure could involve selecting between a contention-based procedure, an example of which is also referred to herein as a connection procedure, at 1306 and a contention-free procedure, an example of which is also referred to herein as a reconnection procedure, at 1308. For example, a determination could be made at 1304 as to whether the received random access channel message is a standby or idle message or an inactive or connected inactive message, illustratively a standby or idle state PRACH or an inactive or connected inactive state PRACH. For a standby or idle message, a full 4-step contention-based procedure is performed at 1306. For an inactive or connected inactive message, a simplified, contention-free 2-step procedure is initiated at 1308. The contention-free procedure at 1308 could enable transition of the UE from the inactive or connected inactive operating mode to a connected or active operating mode, for example. These operating modes or states, and transitions between them, are just examples of parameters and operations that could be involved in a random access procedure. A contention-free procedure, for example, could also or instead be used for other purposes, such as handover or obtaining UL synchronization when UL/DL data arrives for active or connected UEs.

Fig. 13B is a flow diagram illustrating an example multi-stage sequence detection method according to an embodiment. Such multi-stage sequence detection could be part of a random access procedure, and could be applied in either or both of a contention-based or contention-free procedure as illustrated at 1306, 1308 in Fig. 13A, for example.

The example method 1350 in Fig. 13B involves receiving 1352, at a network element in a communication network, a random access channel message from a UE. As shown, the random access channel message includes multiple sequences. These sequences could be formatted into any of a plurality of message formats, examples of which are disclosed herein. In some embodiments, the multiple sequences include a first sequence associated with a group of UEs that includes the UE and a second sequence associated with the UE. For example, the first sequence could be associated with a first search space and the second sequence could be associated with a second search space that includes only sequences associated with any sequences from the first search space. The multiple sequences could also include one or more subsequent sequences associated with one or more respective subsequent search spaces, with each subsequent search space including only subsequent sequences that are associated with sequences from a preceding search space.

In some embodiments, in response to the random access channel message that is received at 1352, a random access procedure to enable the UE to access the random access channel is initiated. The random access procedure involves respective search stages 1354, 1356 for each of the multiple sequences, in the example shown.

The search stages are illustrated by way of example in Fig. 13B as a first search stage 1354 to search for sequences within a first search space, and at least one subsequent search stage 1356 to search for sequences within a second search space that includes only sequences associated with any sequences from the first search space that are detected in the first search stage. There could be only a second search stage at 1356, or multiple subsequent search stages.

Two-stage detection is an example, and involves two sequences. A group preamble search space could be searched at 1354, and only UE preambles associated with any detected group preambles are searched at 1356. In an above example of 100 UEs, with 10 UE groups each with 10 UEs, the first search space of the 10 group preambles is searched at 1352, and then only the UE preambles associated with the group preamble(s) actually detected at 1352 are searched at 1356.

This iterative process of searching in subsequent search stages at 1356 after the first stage at 1354 could be repeated for additional preamble sequences, with each subsequent search stage to search for sequences that are associated with sequences detected in a preceding search stage. The "associated" sequences for the search space of each subsequent search stage could be, for example, next-level sequences that are generated from the same base sequence as a sequence in the search space of the preceding search stage. Examples of this are described elsewhere herein. For example, as described above, in one embodiment a first preamble for UEs within a group could be a ZC sequence, with a given root and cyclic shift, and a second preamble of UEs within a group is generated from the same base ZC sequence element-wise multiplied by an m-sequence, with different cyclic shifts. If the first preamble is detected from any UE within the group in the first search stage at 1354, then the second search stage at 1356 involves searching for UE preambles within that group.

Other operations involved in completing a random access procedure are illustrated generally at 1358, and could include, for example, returning a RAR message to any UEs for which preambles are detected at 1356. A received covered sequence could be scrambled by its base sequence to detect an m-sequence that was used to generate a UE preamble from the base sequence, for example, to determine the UE(s) to which a RAR message is to be transmitted.

Variations of the example method 1350, and/or the example method 1300, could include any one or more of the following:

the method also involves updating the first sequence to a sequence associated with a different group of UEs;

the method also involves transmitting, to the UE, an RRC signal comprising a different first sequence associated with a different group of UEs in order to associate the UE with the different group of UEs;

the method also involves broadcasting an updated pool of associations between the first sequence and the second sequence;

the second sequence includes one of a plurality of sequences that are unique within the group of UEs and available for use within multiple UE groups;

the second sequence includes a sequence from a subset of sequences that are unique within the group of UEs and available for use within only the group of UEs;

the random access procedure enables the UE to transition between different operating modes, at 1358 for example;

the random access procedure involves no operating mode transition by the UE;

the random access procedure involves selecting between a contention-based procedure and a contention-free procedure, at 1358 for example.

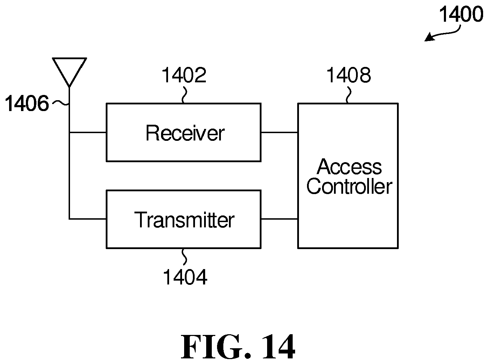

Fig. 14 is a block diagram illustrating a network element according to a further embodiment. The example network element 1400 includes a transmitter 1402 and a receiver 1404 coupled to one or more antennas at 1406, and an access controller 1408 coupled to the transmitter and the receiver. Hardware, firmware, components that execute software, or some combination thereof might be used in implementing at least the transmitter 1402, the receiver 1404, and the access controller 1408. Examples of hardware, firmware, and components that execute software are described above. The antenna shown at 1406 could include separate receive and transmit antennas or sets of antennas, or the same antenna or sets of antennas could be used for both transmitting and receiving communication signals. The antenna 1406 enables communications between the network element 1400 and UEs. A network element may include other components, such as one or more interfaces to other network equipment, for example.

The receiver 1404 is operative to receive, at a network element in a communication network, a random access channel message from a UE. The random access channel message comprises multiple sequences. The multiple sequences include a first sequence associated with a group of UEs that includes the UE and a second sequence associated with the UE, in an embodiment. The access controller 1408, or a processor in a processor-based embodiment, could be configured or otherwise operative to initiate, in response to the random access channel message, a random access procedure. The random access procedure enables the UE to access the random access channel, and includes respective search stages for each of the multiple sequences.

Embodiments could include any one or more of the following:

the first sequence is associated with a first search space and the second sequence is associated with a second search space that includes only sequences associated with any sequences from the first search space;

the multiple sequences further include one or more subsequent sequences associated with one or more respective subsequent search spaces, each subsequent search space including only subsequent sequences that are associated with sequences from a preceding search space;

the respective search stages include a first search stage to search for sequences within a first search space and a second search stage to search for sequences within a second search space that includes only sequences associated with any sequences from the first search space that are detected in the first search stage

the respective search stages include a first search stage and one or more subsequent search stages, with each subsequent search stage to search for sequences that are associated with sequences detected in a preceding search stage;

the access controller 1408 or a processor is configured to update the first sequence to a sequence associated with a different group of UEs;

the access controller 1408 or a processor is configured to transmit, to the UE, an RRC signal that includes a different first sequence associated with a different group of UEs in order to associate the UE with the different group of UE;

the access controller 1408 or a processor is configured to broadcast an updated pool of associations between the first sequence and the second sequence;

the second sequence includes one of a plurality of sequences that are unique within the group of UEs and available for use within multiple UE groups;

the second sequence includes a sequence from a subset of sequences that are unique within the group of UEs and available for use within only the group of UEs;

the random access procedure enables the UE to transition between different operating modes, at 1358 for example;

the random access procedure involves no operating mode transition by the UE;

the random access procedure includes selecting between a contention-based procedure and a contention-free procedure.

Other variations, such as those noted above for the example method 1300, and/or described elsewhere herein, may also apply to the example network element 1400 and operation thereof.

Examples of additional operations that may be performed by the transmitter 1402, the receiver 1404, the access controller 1406, and/or a processor, as well as various ways to perform such operations, are described herein.

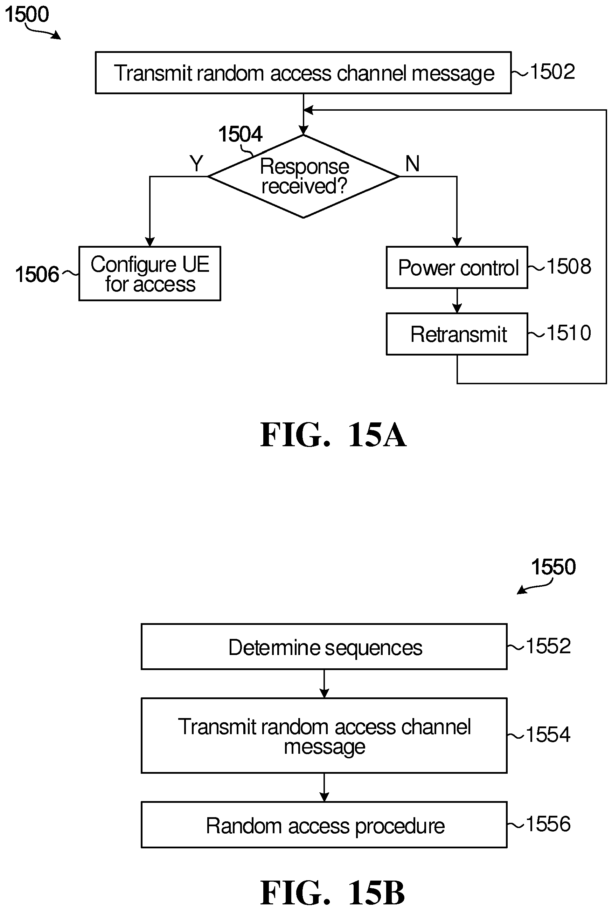

Fig. 15A is a flow diagram illustrating an example random access channel request method. The example method 1500 involves transmitting a random access channel message at 1502, from a UE to a network element in a communication network. As part of a random access procedure that is initiated by the random access channel message in some embodiments, after receiving a response message to the random access channel message from the network element, as determined at 1504, the UE is configured for access to the random access channel at 1506. If no response is received within a certain response time period, a power control procedure is performed at 1508 in the example shown, to change transmit power for retransmission of the random access channel message at 1510. This could involve receiving a signal at the UE for use in the random access message power control.

Power control at 1508 could also or instead be performed to determine transmit power for initial transmission of the random access channel message at 1502, and not just for re-transmission at 1510.

Fig. 15B is a flow diagram illustrating an example method according to another embodiment. The example method 1550 is performed at a UE, and involves determining sequences at 1552. Sequences could be configured and transmitted to a UE, generated by a UE, or otherwise determined at 1552. A random access channel message is transmitted from the UE to a network element at 1554 and includes multiple sequences determined at 1552. In some embodiments, the multiple sequences include a first sequence associated with a group of UEs that includes the UE and a second sequence associated with the UE.

In the example shown, a random access procedure is initiated by the random access channel message that is transmitted at 1554. The UE is configured for access to the random access channel in the random access procedure, which in an embodiment involves respective search stages for each of the multiple sequences. Element 1556 is intended to represent UE operations associated with configuring the UE for access in the random access procedure, and not network-side operations involved in that procedure.

Embodiments could include any one or more of the following:

the first sequence is associated with a first search space and the second sequence is associated with a second search space that includes only sequences associated with any sequences from the first search space;

the multiple sequences comprise one or more subsequent sequences associated with one or more respective subsequent search spaces, each subsequent search space including only subsequent sequences that are associated with sequences from a preceding search space;

respective search stages include a first search stage to search for sequences within a first search space and a second search stage to search for sequences within a second search space that includes only sequences associated with any sequences from the first search space that are detected in the first search stage;

the respective search stages include a first search stage and one or more subsequent search stages, each subsequent search stage to search for sequences that are associated with sequences detected in a preceding search stage;

the method also involves receiving information to update the first sequence to a sequence associated with a different group of UEs;

the method also involves receiving an RRC signal that includes a different first sequence associated with a different group of UEs in order to associate the UE with the different group of UEs;

the method also involves receiving a broadcast signal comprising an updated pool of associations between the first sequence and the second sequence;

the second sequence includes one of a plurality of sequences that are unique within the group of UEs and available for use within multiple UE groups;

the second sequence comprises a sequence from a subset of sequences that are unique within the group of UEs and available for use within only the group of UEs;

the random access procedure enables the UE to transition between different operating modes;

the random access procedure involves no operating mode transition by the UE;

the random access procedure involves selecting between a contention-based procedure and a contention-free procedure.

Other variations, such as those noted above for the example methods 1300, 1350, and/or elsewhere herein, may also apply to the example method 1500 and/or the example method 1550.

The example methods 1300, 1350, 1500, 1550 are illustrative of embodiments. Other embodiments could include different or additional operations. The order in which operations are performed could also be similar to or different from the order shown in Figs. 13A, 13B, 15A, and 15B. Examples of additional operations that may be performed, and/or various ways to perform the illustrated operations, may be or become apparent.

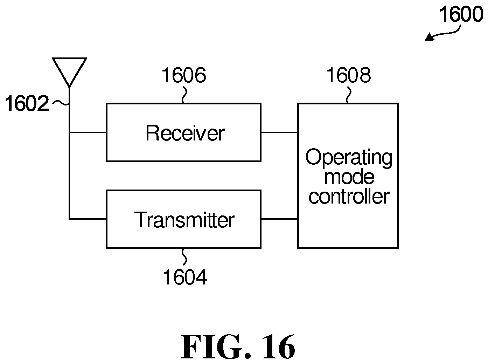

Fig. 16 is a block diagram illustrating an example UE according to an embodiment. The example UE 1600 includes an antenna 1602, a transmitter 1604 and a receiver 1606 coupled to the antenna, and an operating mode controller 1608 coupled to the transmitter and to the receiver.

Although a single antenna 1602 is shown in Fig. 16, a UE could include multiple antennas. Separate receive and transmit antennas or sets of multiple antennas could be provided at 1602, or the same antenna or set of multiple antennas could be used for both receiving and transmitting communication signals. The antenna 1602 could include one or more antennas of any of various types. The type of the antenna, or each antenna, provided at 1602 could be implementation-specific.

In general, hardware, firmware, components which execute software, or some combination thereof might be used in implementing the transmitter 1604, the receiver 1606, and the operating mode controller 1608. Electronic devices that might be suitable for implementing any or all of these components include, among others, microprocessors, microcontrollers, Programmable Logic Devices (PLDs), Field Programmable Gate Arrays (FPGAs), Application Specific Integrated Circuits (ASICs), and other types of "intelligent" integrated circuits.

Software that may be used in operation of the UE 1600 could be stored in one or more physical memory devices. Memory devices could instead be internal to one or more of the components shown in Fig. 16. External memory devices operatively coupled to the illustrated components, or to one or more processors that implement those components, are also possible.

The transmitter 1604 could perform such operations as frequency up-conversion and modulation, and the receiver 1606 could perform inverse operations, including frequency down-conversion and demodulation. The transmitter 1604 and the receiver 1606 could perform other operations instead of or in addition to these example operations, depending on the specific implementation and the types of communication functions and protocols to be supported. The transmitter 1604 and the receiver 1606 are operative transmit communication signals to and receive communication signals from one or more network elements a communication network.

In an embodiment, the operating mode controller 1608, or a processor in a processor-based embodiment, is configured or otherwise operative to transmit a random access channel message to a network element. The random access channel message, as noted above, includes multiple sequences such as a first sequence associated with a group of UEs that includes the UE and a second sequence associated with the UE, and could be in any one of a plurality of different message formats. The operating mode controller 1608 or processor could be further operative to configure the UE 1600 for access to the random access channel in a random access procedure that is initiated by the random access channel message and involves respective search stages for each of the multiple sequences.

Embodiments could include any one or more of the following:

the first sequence is associated with a first search space and the second sequence is associated with a second search space that includes only sequences associated with any sequences from the first search space;

the multiple sequences further include one or more subsequent sequences associated with one or more respective subsequent search spaces, each subsequent search space including subsequent sequences that are associated with sequences from a preceding search space;

the respective search stages include a first search stage to search for sequences within a first search space and a second search stage to search for sequences within a second search space that includes only sequences associated with any sequences from the first search space that are detected in the first search stage;

the respective search stages include a first search stage and one or more subsequent search stages, each subsequent search stage to search for sequences that are associated with sequences detected in a preceding search stage;

the receiver is configured to receive information to update the first sequence to a sequence associated with a different group of UEs;

the receiver is configured to receive a Radio Resource Control (RRC) signal comprising a different first sequence associated with a different group of UEs in order to associate the UE with the different group of UEs;

the receiver is configured to receive a broadcast signal comprising an updated pool of associations between the first sequence and the second sequence;

the second sequence includes one of a plurality of sequences that are unique within the group of UEs and available for use within multiple UE groups;

the second sequence comprises a sequence from a subset of sequences that are unique within the group of UEs and available for use within only the group of UEs;

the random access procedure enables the UE to transition between different operating modes;

the random access procedure involves no operating mode transition by the UE;

the random access procedure involves selecting between a contention-based procedure and a contention-free procedure.

Other variations, such as those noted above for the example methods 1500, 1550, and/or elsewhere herein, may also apply to the example UE 1600 and operation thereof.

Examples of additional operations that may be performed by the transmitter 11604, the receiver 1606, the operating mode controller 1608, and/or a processor, as well as various ways to perform such operations, are described herein.

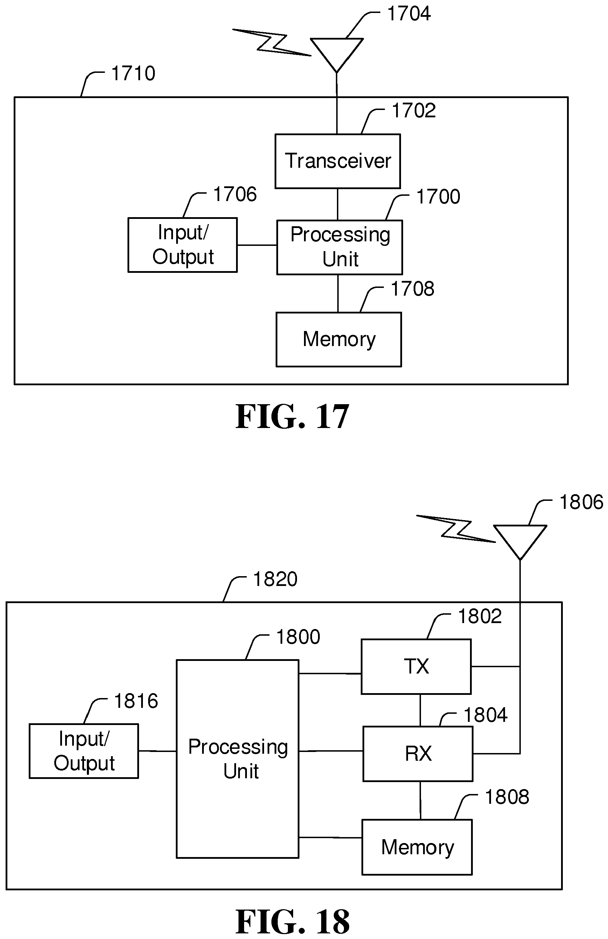

Figs. 14 and 16 illustrate general block diagrams of devices. Figs. 17 and 18 illustrate further example devices that may implement the methods and teachings according to this disclosure. In particular, Fig. 17 illustrates an example UE 1710, and Fig. 18 illustrates an example network element 1820 such as a base station. These components could be used in the communication system 100, the communication system 101, or in any other suitable system.

As shown in Fig. 17, the UE 1710 includes at least one processing unit 1700. The processing unit 1700 implements various processing operations of the UE 1710. For example, the processing unit 1700 could perform signal coding, data processing, power control, input/output processing, or any other functionality enabling the UE 1710 to operate in a communication system such as 100, 101. The processing unit 1700 may also be configured to implement some or all of the functionality and/or embodiments described in more detail herein. Each processing unit 1700 includes any suitable processing or computing device configured to perform one or more operations. Each processing unit 1700 could, for example, include a microprocessor, microcontroller, digital signal processor, field programmable gate array, or application specific integrated circuit.

The UE 1710 also includes at least one transceiver 1702. The transceiver 1702 is configured to modulate data or other content for transmission by at least one antenna or Network Interface Controller (NIC) 1704. The transceiver 1702 is also configured to demodulate data or other content received by the at least one antenna 1704. Each transceiver 1702 includes any suitable structure for generating signals for wireless or wired transmission and/or processing signals received wirelessly or by wire. Each antenna 1704 includes any suitable structure for transmitting and/or receiving wireless or wired signals. One or multiple transceivers 1702 could be used in the UE 1710. One or multiple antennas 1704 could be used in the UE 1710. Although shown as a single functional unit, a transceiver 1702 could also be implemented using at least one transmitter and at least one separate receiver.

The UE 1710 further includes one or more input/output devices 1706 or interfaces (such as a wired interface to the internet). The input/output devices 1706 permit interaction with a user or other devices in the network. Each input/output device 1706 includes any suitable structure for providing information to or receiving information from a user, such as a speaker, microphone, keypad, keyboard, display, or touch screen, including network interface communications.

In addition, the UE 1710 includes at least one memory 1708. The memory 1708 stores instructions and data used, generated, or collected by the UE 1710. For example, the memory 1708 could store software instructions or modules configured to implement some or all of the functionality and/or embodiments described above and that are executed by the processing unit(s) 1700. Each memory 1708 includes any suitable volatile and/or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in Fig. 18, the base station 1820 includes at least one processing unit 1800, at least one transmitter 1802, at least one receiver 1804, one or more antennas 1806, at least one memory 1808, and one or more input/output devices or interfaces 1816. A transceiver, not shown, may be used instead of the transmitter 1802 and receiver 1804. A scheduler may be coupled to the processing unit 1800. The scheduler may be included within or operated separately from the base station 1820. The processing unit 1800 implements various processing operations of the base station 1820, such as signal coding, data processing, power control, input/output processing, or any other functionality. The processing unit 1800 can also be configured to implement some or all of the functionality and/or embodiments described in more detail above. Each processing unit 1800 includes any suitable processing or computing device configured to perform one or more operations. Each processing unit 1800 could, for example, include a microprocessor, microcontroller, digital signal processor, field programmable gate array, or application specific integrated circuit.

Each transmitter 1802 includes any suitable structure for generating signals for wireless or wired transmission to one or more UEs or other devices. Each receiver 1804 includes any suitable structure for processing signals received wirelessly or by wire from one or more UEs or other devices. Although shown as separate components, at least one transmitter 1802 and at least one receiver 1804 could be combined into a transceiver. Each antenna 1806 includes any suitable structure for transmitting and/or receiving wireless or wired signals. Although a common antenna 1806 is shown here as being coupled to both the transmitter 1802 and the receiver 1804, one or more antennas 1806 could be coupled to the transmitter(s) 1802, and one or more separate antennas 1806 could be coupled to the receiver(s) 1804. Each memory 1808 includes any suitable volatile and/or non-volatile storage and retrieval device(s) such as those described above in connection to the UE 1710. The memory 1808 stores instructions and data used, generated, or collected by the base station 1820. For example, the memory 1808 could store software instructions or modules configured to implement some or all of the functionality and/or embodiments described above and that are executed by the processing unit(s) 1800.

Each input/output device 1806 permits interaction with a user or other devices in the network. Each input/output device 1806 includes any suitable structure for providing information to or receiving/providing information from a user, including network interface communications.

Various embodiments are described in detail herein. Several features are also summarized below.

The present disclosure contemplates different formats/configurations of PRACH preambles, to be supported in NR in some embodiments. Preamble formats and/or configurations could be NR-cell specific configured. Sequence pool generation for random sequence selection is NR-cell specific in an embodiment. Sequence assignment could be UE-specific. RAR resource mapping could also or instead be UE-specific.

New PRACH procedures / frame structures are proposed. Two-stage / multi-stage detection with two / multiple (possibly smaller) preambles instead of one (possibly larger) preamble may reduce detection complexity, and could be applied in random access procedures such as a contention-based procedure and/or a contention-free procedure.

Two-stage / multi-stage detection could be applied to contention-based and contention-free access procedures. Such two-stage detection could represent an entire random access procedure, in the case of a 2-step contention-free procedure for a connected inactive UE for example, or the first 2 steps of a 4-step contention-based procedure for a standby or idle UE for example.

For NR, numerology design of PRACH could also be taken into account. For multi-TRP joint reception, for example, max RTT from multiple TRPs instead of RTT from one TRP, and RAR from one of multiple TRPs that hear the same preamble could be considered. Level of timing alignment for UEs in inactive or connected inactive mode could be considered to relax CP and GT requirements, with possibly shorter CP and GT as described herein. Link budget requirements could be adapted for NR, based on coverage, max delay spread, etc. Different frame structures for UL only, UL dominant, different sub-frame lengths, etc., are possible. Different data subcarrier spacings are also possible. For example, either only default subcarrier spacing in a frequency range could be designed for, or multiple possible subcarrier spacings in a frequency range could be designed for. PRACH transmission power control is also implemented in some embodiments.

What has been described is merely illustrative of the application of principles of embodiments of the present disclosure. Other arrangements and methods can be implemented by those skilled in the art.

The contents of the drawings are intended solely for illustrative purposes, and the present invention is in no way limited to the particular example embodiments explicitly shown in the drawings and described herein. For example, Figs. 1A and 1B are block diagrams of communication systems in which embodiments may be implemented. Other embodiments could be implemented in communication systems that include more network elements than shown, or that have different topologies than the example shown. Similarly, the other drawings are also intended solely for illustrative purposes.

Other implementation details could also vary between different embodiments. For example, some of the examples above refer to LTE and NR terminology. However, the embodiments disclosed herein are not in any way limited to LTE / NR systems. RRC idle mode is an example of a standby or idle operating mode in LTE systems. Standby or idle operating modes in other types of systems include Sleep mode and DRX (Discontinuous reception) mode, for instance.

In addition, although described primarily in the context of methods and systems, other implementations are also contemplated, as instructions stored on a non-transitory processor-readable medium, for example. The instructions, when executed by one or more processors, cause the one or more processors to perform a method.

In some embodiments, in response to receiving a random access channel message from a UE that is operating in a connected inactive operating mode, a network element in a communication network initiates a reconnection procedure. The random access channel message may be in any one of multiple different message formats. The reconnection procedure enables transition of the UE from the connected inactive operating mode to an active operating mode, and involves the network element transmitting a single response message to the UE to complete the reconnection procedure. Power control for random access message transmission is also implemented by the UE in some embodiments.

In other embodiments, in response to receiving a random access channel message from a UE, a network element in a communication network initiates a random access procedure. The random access channel message includes multiple sequences, and may be in any one of multiple different message formats. The random access procedure includes respective search stages for each of the multiple sequences. Power control for random access message transmission is also implemented by the UE in some embodiments.

**Claims**

**1.** A method comprising:

receiving (1302, 1352), at a network element in a communication network, a random access channel message from a User Equipment, UE, the random access channel message comprising multiple sequences, wherein the multiple sequences include a first sequence associated with a group of UEs that includes the UE and a second sequence associated with the UE.

2. The method of claim 1, wherein the first sequence is associated with a first search space and the second sequence is associated with a second search space that includes only sequences associated with any sequences from the first search space.

3. The method of claim 2, wherein the multiple sequences further comprise subsequent sequences associated with respective subsequent search spaces, each subsequent search space including only subsequent sequences that are associated with sequences from a preceding search space.

4. The method of any one of claims 1 to 3, further comprising:
transmitting, to the UE, a Radio Resource Control, RRC, signal comprising a different first sequence associated with a different group of UEs in order to associate the UE with the different group of UEs.

5. The method of any one of claims 1 to 3, further comprising:
broadcasting an updated pool of associations between the first sequence and the second sequence.

6. The method of any one of claims 1 to 5, wherein the second sequence comprises a sequence from a subset of sequences that are unique within the group of UEs and available for use within only the group of UEs.

7. An apparatus comprising:

a processor; and
a non-transitory processor-readable medium storing instructions which, when executed by the processor, cause the processor to perform a method in accordance with any one of claims 1 to 6.

8. A method comprising:

transmitting (1502, 1554) a random access channel message from a User Equipment, UE, to a network element in a communication network, the random access channel message comprising multiple sequences, wherein the multiple sequences include a first sequence associated with a group of UEs that includes the UE and a second sequence associated with the UE.

9. The method of claim 8, wherein the first sequence is associated with a first search space and the second sequence is associated with a second search space that includes only sequences associated with any sequences from the first search space.

10. The method of claim 9, wherein the multiple sequences further comprise subsequent sequences associated with respective subsequent search spaces, each subsequent search space including only subsequent sequences that are associated with sequences from a preceding search space.

11. The method of any one of claims 8 to 10, further comprising:
receiving a Radio Resource Control, RRC, signal comprising a different first sequence associated with a different group of UEs in order to associate the UE with the different group of UEs.

12. The method of any one of claims 8 to 10, further comprising:
receiving a broadcast signal comprising an updated pool of associations between the first sequence and the second sequence.

13. The method of any one of claims 8 to 12, wherein the second sequence comprises a sequence from a subset of sequences that are unique within the group of UEs and available for use within only the group of UEs.

14. A User Equipment, UE, comprising:

a processor; and

a non-transitory processor-readable medium storing instructions which, when executed by the processor, cause the processor to perform a method in accordance with any one of claims 8 to 13.

**Patentansprüche**

1. Verfahren, das Folgendes aufweist:

   Empfangen (1302, 1352), an einem Netzwerkelement in einem Kommunikationsnetzwerk, einer Direktzugriffskanalnachricht von einem Benutzergerät, UE, wobei die Direktzugriffskanalnachricht mehrere Sequenzen aufweist,
   wobei die mehreren Sequenzen eine erste Sequenz in Verbindung mit einer Gruppe von UEs, die das UE aufweist, und eine zweite Sequenz in Verbindung mit dem UE aufweist.

2. Verfahren nach Anspruch 1, wobei die erste Sequenz mit einem ersten Suchraum verbunden ist und die zweite Sequenz mit einem zweiten Suchraum verbunden ist, der nur Sequenzen aufweist, die mit beliebigen Sequenzen aus dem ersten Suchraum verbunden sind.

3. Verfahren nach Anspruch 2, wobei die mehreren Sequenzen ferner nachfolgende Sequenzen in Verbindung mit entsprechenden nachfolgenden Suchräumen aufweisen, wobei jeder nachfolgende Suchraum nur nachfolgende Sequenzen aufweist, die mit Sequenzen aus einem vorhergehenden Suchraum verbunden sind.

4. Verfahren nach einem der Ansprüche 1 bis 3, das ferner Folgendes aufweist:
   Senden, an das UE, eines Funkressourcensteuerungs(RRC)-Signals, das eine unterschiedliche erste Sequenz in Verbindung mit einer unterschiedlichen Gruppe von UEs aufweist, um das UE mit der unterschiedlichen Gruppe von UEs zu verbinden.

5. Verfahren nach einem der Ansprüche 1 bis 3, das ferner Folgendes aufweist:
   Rundsenden einer aktualisierten Sammlung von Verbindungen zwischen der ersten Sequenz und der zweiten Sequenz.

6. Verfahren nach einem der Ansprüche 1 bis 5, wobei die zweite Sequenz eine Sequenz aus einer Untermenge von Sequenzen aufweist, die eindeutig innerhalb der Gruppe von UEs sind und zur Verwendung nur innerhalb der Gruppe von UEs verfügbar sind.

7. Vorrichtung, die Folgendes aufweist:

   einen Prozessor; und
   ein nicht-flüchtiges prozessorlesbares Medium, das Anweisungen speichert, die, wenn durch den Prozessor ausgeführt, den Prozessor veranlassen, ein Verfahren nach einem der Ansprüche 1 bis 6 durchzuführen.

8. Verfahren, das Folgendes aufweist:

   Senden (1502, 1554) einer Direktzugriffskanalnachricht von einem Benutzergerät, UE, an ein Netzwerkelement in einem Kommunikationsnetzwerk, wobei die Direktzugriffskanalnachricht mehrere Sequenzen aufweist,
   wobei die mehreren Sequenzen eine erste Sequenz in Verbindung mit einer Gruppe von UEs, die das UE aufweist, und eine zweite Sequenz in Verbindung mit dem UE aufweist.

9. Verfahren nach Anspruch 8, wobei die erste Sequenz mit einem ersten Suchraum verbunden ist und die zweite Sequenz mit einem zweiten Suchraum verbunden ist, der nur Sequenzen aufweist, die mit beliebigen Sequenzen aus dem ersten Suchraum verbunden sind.

10. Verfahren nach Anspruch 9, wobei die mehreren Sequenzen ferner nachfolgende Sequenzen in Verbindung mit entsprechenden nachfolgenden Suchräumen aufweisen, wobei jeder nachfolgende Suchraum nur nachfolgende Sequenzen aufweist, die mit Sequenzen aus einem vorhergehenden Suchraum verbunden sind.

11. Verfahren nach einem der Ansprüche 8 bis 10, das ferner Folgendes aufweist:
    Empfangen eines Funkressourcensteuerungs(RRC)-Signals, das eine unterschiedliche erste Sequenz in Verbindung mit einer unterschiedlichen Gruppe von UEs aufweist, um das UE mit der unterschiedlichen Gruppe von UEs zu verbinden.

**12.** Verfahren nach einem der Ansprüche 8 bis 10, das ferner Folgendes aufweist:
Empfangen eines Rundsendesignals, das eine aktualisierte Sammlung von Verbindungen zwischen der ersten Sequenz und der zweiten Sequenz aufweist.

**13.** Verfahren nach einem der Ansprüche 8 bis 12, wobei die zweite Sequenz eine Sequenz aus einer Untermenge von Sequenzen aufweist, die eindeutig innerhalb der Gruppe von UEs sind und zur Verwendung nur innerhalb der Gruppe von UEs verfügbar sind.

**14.** Benutzergerät, UE, das Folgendes aufweist:

einen Prozessor; und
ein nicht-flüchtiges prozessorlesbares Medium, das Anweisungen speichert, die, wenn durch den Prozessor ausgeführt, den Prozessor veranlassen, ein Verfahren nach einem der Ansprüche 8 bis 13 durchzuführen.

## Revendications

**1.** Procédé comprenant :

la réception (1302, 1352), au niveau d'un élément de réseau dans un réseau de communication, d'un message de canal d'accès aléatoire provenant d'un équipement utilisateur, UE, le message de canal d'accès aléatoire comprenant de multiples séquences,
dans lequel les multiples séquences comprennent une première séquence associée à un groupe d'UE qui comprend l'UE et une seconde séquence associée à l'UE.

**2.** Procédé selon la revendication 1, dans lequel la première séquence est associée à un premier espace de recherche et la seconde séquence est associée à un second espace de recherche qui comprend seulement des séquences associées à des séquences quelconques provenant du premier espace de recherche.

**3.** Procédé selon la revendication 2, dans lequel les multiples séquences comprennent en outre des séquences ultérieures associées à des espaces de recherche ultérieurs respectifs, chaque espace de recherche ultérieur comprenant seulement des séquences ultérieures qui sont associées à des séquences provenant d'un espace de recherche précédent.

**4.** Procédé selon l'une quelconque des revendications 1 à 3, comprenant en outre :
la transmission, à l'UE, d'un signal de commande de ressources radio, RRC, comprenant une première séquence différente associée à un groupe différent d'UE afin d'associer l'UE au groupe différent d'UE.

**5.** Procédé selon l'une quelconque des revendications 1 à 3, comprenant en outre :
la diffusion d'un groupe d'associations mis à jour entre la première séquence et la seconde séquence.

**6.** Procédé selon l'une quelconque des revendications 1 à 5, dans lequel la seconde séquence comprend une séquence provenant d'un sous-ensemble de séquences qui sont uniques dans le groupe d'UE et disponibles pour une utilisation seulement dans le groupe d'UE.

**7.** Appareil comprenant :

un processeur ; et
un support lisible par processeur non transitoire stockant des instructions qui, lorsqu'elles sont exécutées par le processeur, amènent le processeur à mettre en œuvre un procédé selon l'une quelconque des revendications 1 à 6.

**8.** Procédé comprenant :

la transmission (1502, 1554) d'un message de canal d'accès aléatoire provenant d'un équipement utilisateur, UE, à un élément de réseau dans un réseau de communication, le message de canal d'accès aléatoire comprenant de multiples séquences,

dans lequel les multiples séquences comprennent une première séquence associée à un groupe d'UE qui comprend l'UE et une seconde séquence associée à l'UE.

9. Procédé selon la revendication 8, dans lequel la première séquence est associée à un premier espace de recherche et la seconde séquence est associée à un second espace de recherche qui comprend seulement des séquences associées à des séquences quelconques provenant du premier espace de recherche.

10. Procédé selon la revendication 9, dans lequel les multiples séquences comprennent en outre des séquences ultérieures associées à des espaces de recherche ultérieurs respectifs, chaque espace de recherche ultérieur comprenant seulement des séquences ultérieures qui sont associées à des séquences provenant d'un espace de recherche précédent.

11. Procédé selon l'une quelconque des revendications 8 à 10, comprenant en outre :
la réception d'un signal de commande de ressources radio, RRC, comprenant une première séquence différente associée à un groupe différent d'UE afin d'associer l'UE au groupe différent d'UE.

12. Procédé selon l'une quelconque des revendications 8 à 10, comprenant en outre :
la réception d'un signal de diffusion comprenant un groupe d'associations mis à jour entre la première séquence et la seconde séquence.

13. Procédé selon l'une quelconque des revendications 8 à 12, dans lequel la seconde séquence comprend une séquence provenant d'un sous-ensemble de séquences qui sont uniques dans le groupe d'UE et disponibles pour une utilisation seulement dans le groupe d'UE.

14. Équipement utilisateur, UE, comprenant :

un processeur ; et
un support lisible par processeur non transitoire stockant des instructions qui, lorsqu'elles sont exécutées par le processeur, amènent le processeur à mettre en œuvre un procédé selon l'une quelconque des revendications 8 à 13.

FIG. 1A

**FIG. 1B**

**FIG. 2**

**FIG. 3**

**FIG. 4**

**FIG. 5**

600

Guard Band

CP1 | Preamble 1
(UE group detection) | GT

Guard Band

RTT+delay | RTT

Guard Band

CP2 | Preamble 2
(UE detection) | GT

Guard Band

RTT+delay | RTT

frequency

time

# FIG. 6

Fitted curve for large-scale gain versus distance.

**FIG. 7**

800

**FIG. 8**

900

**FIG. 9**

**FIG. 10**

**FIG. 11**

**FIG. 12**

1300

Receive random access channel message ~1302

1304

(e.g., Standby or Idle)

Initiate Random Access Procedure

(e.g., Inactive or Connected Inactive)

1306

Contention-Based Procedure (4 Steps)

1308

Contention-Free Procedure (2 Steps)

**FIG. 13A**

1350

Receive random access channel message including multiple sequences ~1352

First search stage ~1354

Subsequent search stage(s) ~1356

Complete random access procedure ~1358

**FIG. 13B**

FIG. 14

1500

Transmit random access channel message ~1502

1504

Y — Response received? — N

1506~ Configure UE for access

Power control ~1508

Retransmit ~1510

**FIG. 15A**

1550

Determine sequences ~1552

Transmit random access channel message ~1554

Random access procedure ~1556

**FIG. 15B**

FIG. 16

1704

1710

1702

Transceiver

1706

1700

Input/
Output

Processing
Unit

1708

Memory

## FIG. 17

1806

1820

1802

TX

1800

1816

1804

Input/
Output

Processing
Unit

RX

1808

Memory

## FIG. 18

**EP 3 530 061 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CATT.** NR RACH Preamble Design Consideration. *3GPP TSG RAN WG1 #86bis,* 10 October 2016